# FASCICULE DE BREVET EUROPEEN

(11) **EP 3 999 579 B1**
(45) Date de publication et mention de la délivrance du brevet: **28.06.2023**
(21) Numéro de dépôt: 20750341.8
(22) Date de dépôt: 09.07.2020
(51) Int. Cl.: C08K 5/55, C08F 4/52, C08F 24/00, C08F 290/14, C09J 175/04, C09J 133/08, C08G 18/10, C08G 18/16, C08G 18/32, C09J 175/14, C08F 290/06, C08K 5/17, C09J 151/08, C09J 4/06

(54) **COMPOSITION ADHÉSIVE BI-COMPOSANTE COMPRENANT UN COMPLEXE ORGANOBORANE-AMINE**
ZWEIKOMPONENTIGE KLEBSTOFFZUSAMMENSETZUNG MIT EINEN ORGANOBORAN-AMIN-KOMPLEX
TWO-COMPONENT ADHESIVE COMPOSITION COMPRISING AN ORGANOBORANE AMINE COMPLEX

(30) Priorité: 18.07.2019 FR 1908162
(43) Date de publication de la demande: 25.05.2022
(73) Titulaire: Bostik SA, 92700 Colombes (FR)
(72) Inventeur: MICHAUD, Guillaume, 60280 VENETTE (FR); POIVRET, Colombine, 60280 VENETTE (FR); DELMOTTE, Bruno, 60280 VENETTE (FR); COLIN, Boris, 60280 VENETTE (FR)
(74) Mandataire: Arkema Patent
(86) Numéro de dépôt international: PCT/FR2020/051235
(87) Numéro de publication internationale: WO 2021/009446

(56) Documents cités:
- WO-A1-2009/120588
- US-A1- 2019 211 229

## Description

### Domaine d'invention

La présente invention concerne une composition bi-composante ainsi que les utilisations de ladite composition. L'invention concerne également des articles fabriqués avec cette composition et les procédés de préparation desdits articles.

### Arrière-Plan technique

La nature de la surface d'un substrat peut être caractérisée par son énergie de surface. Les substrats de basse énergie de surface, tels que les polyoléfines (polyéthylène, polypropylène polybutène, polyisoprène, polybutadiène, polyfarnésène, polymyrcène, polydicyclopentadiene ainsi que leurs copolymères ou leurs mélanges), polyfluorure de vinyle (PVF), polyfluorure de vinylidène (PVDF), polytétrafluoroéthylène (PTFE), sont connus pour être difficiles à coller entre eux ou avec d'autres types de substrats et nécessitent souvent un traitement de la surface avant le collage. Cela est dû au fait qu'ils ont très peu de sites de liaison disponibles sur leur surface libre. Ces traitements, tels qu'un traitement plasma ou corona, une abrasion ou un traitement avec un agent chimique, consistent à modifier chimiquement et/ou physiquement la surface du substrat pour modifier favorablement son énergie de surface.

Cependant, ce type de traitement présente un certain nombre de désavantages, tel qu'un coût de procédé élevé, des résultats pas forcément reproductibles, ainsi qu'un effet qui s'atténue avec le temps.

Récemment, il a été découvert que l'utilisation des compositions adhésives comprenant des organoboranes permettent d'améliorer l'adhésion des composés pouvant être polymérisés par voie radicalaire sur des surfaces de basse énergie. Toutefois, en raison de la nature instable et pyrophorique des organoboranes, ces derniers doivent être complexés avec une amine de sorte à éviter une décomposition oxydative. Ainsi, lors de l'utilisation de ce type de composition, un agent décomplexant libère l'organoborane de l'amine, pour qu'il puisse initier la polymérisation d'un composé polymérisable par voie radicalaire présent dans la composition. Ce type de composition est souvent sous la forme de deux parties (une comprenant le complexe organoborane-amine et une comprenant l'agent décomplexant) mélangées juste avant l'utilisation et l'application de la composition. Le composé polymérisable par voie radicalaire peut être présent dans au moins une des deux compositions.

De manière générale, l'agent décomplexant peut réagir avec l'amine du complexe organoborane-amine pour libérer l'organoborane qui pourra ensuite initier la polymérisation du composé polymérisable. Ainsi, après réticulation, la composition bi-composante comprend un premier type de composé/polymère c'est-à-dire l'agent décomplexant ayant réagi avec l'amine et un deuxième type de composé/polymère c'est-à-dire le polymère formé à partir du composé polymérisable. Par conséquent, le réseau de polymère de la composition réticulée n'est pas homogène et présente une certaine fragilité qui peut influencer les propriétés adhésives de la composition.

Le document WO 2016/077166 concerne une composition en deux parties comprenant une première partie comprenant un complexe organoborane-amine et un diluant réactif, et une deuxième partie comprenant un agent décomplexant pour décomplexer le complexe organoborane-amine, et au moins un composé polymérisable comprenant une liaison insaturée éthylénique.

Le document WO 2009/120588 décrit une composition adhésive en deux parties comprenant un complexe organoborane-amine, une polyamine, un composé polymérisable par voie radicalaire et un composé isocyanate. Un prépolymère ayant des extrémités isocyanate peut avantageusement être utilisé. Ces compositions sont particulièrement adaptées pour l'adhésion des substrats ayant une basse énergie de surface.

Le document WO 2017/115697 concerne une composition adhésive utilisée pour lier des substrats de basse énergie de surface, tels que le polypropylène. Selon ce document, la composition adhésive comprend un composé comportant un groupe insaturé polymérisable, tel qu'un monomère méthacrylique, un agent réducteur et une polyamine.

Le document US 6,008,308 décrit une composition comprenant un complexe organoborane-polyamine, un polyol et un composé isocyanate. La composition peut également comprendre un composé bifonctionnel comprenant un groupement radicalement polymérisable et un groupement réactif avec une amine. Cette composition est utilisée pour initier la polymérisation d'un monomère acrylique et pour former des adhésives polyuréthane/polyurée acryliques.

Le document WO 2019/046200 décrit une composition polymérisable adhésive en deux parties, comprenant un complexe organoborane-monoamine, un polyol libre, au moins un composé polymérisable par voie radicalaire, un uréthane ayant des extrémités isocyanate, un isocyanate libre et un composé d'allongement de chaine de faible poids moléculaire.

Le document US 2007/0135601 concerne des complexes d'organoboranes avec des composés organosilylés fonctionnalisés avec des groupements aminés qui sont des initiateurs de polymérisation efficaces pour la polymérisation radicalaire, notamment pour les adhésives acrylates et méthacrylates. Ces complexes sont particulièrement adaptés pour l'adhésion des substrats ayant une basse énergie de surface.

Le document US 2015/0232686 décrit une composition adhésive comprenant au moins un polymère organique, au moins un monomère choisi dans le groupe comprenant des acrylates, au moins un catalyseur choisi dans le groupe comprenant des amines tertiaires organiques, et au moins un solvant.

Le document WO 2014/140138 concerne une composition polymérisable comprenant un composé polymérisable d'acrylate ou méthacrylate, un composé organoborane initiateur de polymérisation, un composé d'éther de vinyle, et un activateur pour le composé organoborane. La composition présente une bonne stabilité au stockage et des bonnes propriétés adhésives, notamment lorsqu'elle est utilisée pour l'adhésion sur des surfaces de basse énergie.

Le document US 2015/0259568 concerne des dispersions aqueuses des polyuréthanes qui sont polymérisables par irradiation UV.

Il existe donc un réel besoin de fournir une composition permettant une adhésion améliorée, notamment sur et entre des substrats ayant une basse énergie de surface, la composition bi-composante comprenant, après réticulation, un réseau de polymère homogène et résistant.

Le document US 2019/211229 concerne une composition adhésive comprenant un réseau de polymère interpénétrant polyurée-poly(méth)acrylate obtenue à partir d'une composition bi-composante. La composition présente une partie A comprenant du complexe d'organoborane TnBB-MOPA et une partie B comprenant du copolymère styrène-butadiène-styrène (Kraton^{®} D1157); du copolymère MABS (TR 558A); des monomères acryliques; et de l'isocyanate polymérique.

### Résumé de l'invention

L'invention concerne en premier lieu une composition bi-composante comprenant :
- une partie A comprenant un complexe d'organoborane avec une amine ;
- une partie B comprenant un polymère comprenant au moins un groupement acrylique et au moins un groupement isocyanate ;
la composition comprenant au moins un monomère ou oligomère acrylique dans la partie A et/ou dans la partie B de la composition. Selon certains modes de réalisation, l'organoborane est de formule (I) : 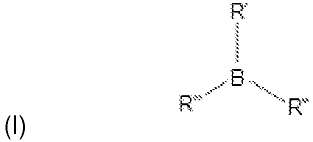 dans laquelle R', R" et R'" représentent indépendamment un groupement comprenant de 1 à 20 atomes de carbone, le groupement étant linéaire ou ramifié et étant choisi parmi un groupement alkyle, un groupement cycloalkyle, ou un groupement aryle.

Selon certains modes de réalisation, l'organoborane est du triéthylborane, ou du tri-n-butylborane, ou du tri-sec-butylborane.

Selon certains modes de réalisation:
- l'amine est de formule (II) : 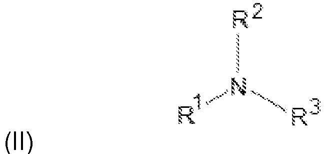 dans laquelle R¹, R² et R³ représentent indépendamment un atome d'hydrogène ou un groupement comprenant de 1 à 20 atomes de carbone, le groupement étant linéaire ou ramifié, saturé ou insaturé et étant choisi parmi un groupement alkyle, un groupement cycloalkyle, ou un groupement aryle ;
- ou l'amine est de formule (III) : 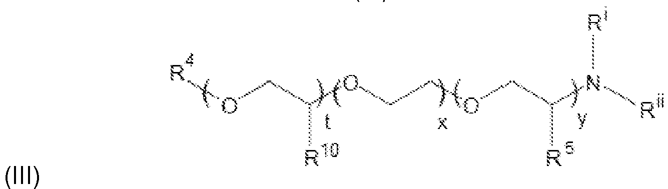 dans laquelle R⁴, R⁵ et R¹⁰ représentent indépendamment un atome d'hydrogène et un groupement comprenant de 1 à 10 atomes de carbone, le groupement étant linéaire ou ramifié, saturé ou insaturé et étant choisi parmi un groupement alkyle, un groupement cycloalkyle, ou un groupement aryle, Rⁱ et Rⁱⁱ représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, un groupement aryle, ou un groupement arylalkyle et t, x et y représentent indépendamment un nombre de 0 à 90 préférentiellement de 0 à 70, préférentiellement de 0 à 50 et encore plus préférentiellement de 0 à 30 ;
- ou l'amine est de formule (IV) : 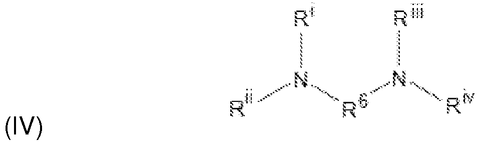 dans laquelle R⁶ représente un groupement divalent comprenant de 2 à 60 atomes de carbone, et de préférence de 2 à 40 atomes de carbone, le groupement étant linéaire ou ramifié, saturé ou insaturé, et étant choisi parmi un radical divalent alkyle, un radical divalent cycloalkyle, un radical divalent arylalkyle, ou un radical divalent aryle, et Rⁱ, Rⁱⁱ, Rⁱⁱⁱ et R^{iv} représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, un groupement aryle ou un groupement arylalkyle ;
- ou l'amine est de formule (V) : 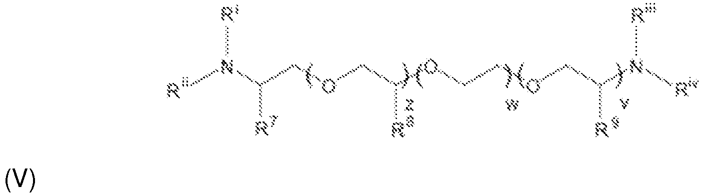 dans laquelle R⁷ R⁸ et R⁹ représentent indépendamment un groupement comprenant de 1 à 10 atomes de carbone, le groupement étant linéaire ou ramifié, saturé ou insaturé, et étant choisi parmi un groupement alkyle, un groupement cycloalkyle, ou un groupement aryle, Rⁱ, Rⁱⁱ, Rⁱⁱⁱ et R^{iv} représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, un groupement aryle ou un groupement arylalkyle, et v, w et z représentent indépendamment un nombre de 0 à 90 et encore plus préférentiellement de 0 à 70 ;
- ou l'amine est de formule (VI) : 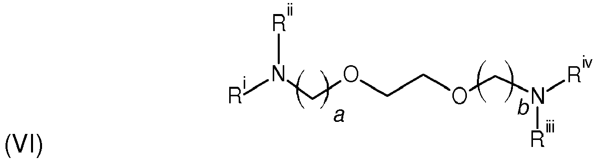 dans laquelle Rⁱ, Rⁱⁱ, Rⁱⁱⁱ et R^{iv} représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, un groupement aryle ou un groupement arylakyle ; a et b représentent indépendamment un nombre de 1 à 20 et de préférence de 2 à 11 ;
- ou l'amine est de formule (VII) : 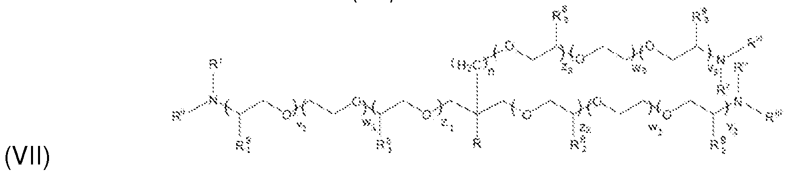 dans laquelle R₁⁸, R₁⁹, R₂⁸, R₂⁹, R₂⁹, R₃⁸, et R₃⁹ représentent indépendamment un groupement comprenant de 1 à 10 atomes de carbone, le groupement étant linéaire ou ramifié et étant choisi parmi un groupement alkyle, un groupement cycloalkyle, ou un groupement aryle, R représente un atome d'hydrogène et un groupement comprenant de 1 à 10 atomes de carbone le groupement étant linéaire ou ramifié et étant choisi parmi un groupement alkyle, un groupement cycloalkyle, un groupement aryle ou un groupement arylalkyle, Rⁱ, Rⁱⁱ, Rⁱⁱⁱ et R^{iv} représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, un groupement aryle ou un groupement arylalkyle, n représente un nombre de 0 à 30 et de préférence égal à 0 ou 1 et les sommes z₁ + z₂ + z₃, v₁ + v₂ + v₃ et w₁ + w₂ + w₃ représentent indépendamment un nombre de 0 à 90, préférentiellement de 0 à 70, préférentiellement de 0 à 50 et encore plus préférentiellement de 0 à 30.

Selon certains modes de réalisation, l'amine est choisie parmi la tert-butylamine, la 3-méthoxypropylamine, la 1,3-propanediamine, la 1,6-hexanediamine, et la diéthylènetriamine.

Selon certains modes de réalisation, le complexe organoborane avec l'amine est le triéthylborane-1,3-diaminopropane, le tri-n-butylborane-3-méthoxypropylamine, le triéthylborane-diéthylènetriamine, le tri-n-butylborane-1,3-diaminopropane, le tri-sec-butylborane-1,3-diaminopropane et le triéthylborane-1,6-hexanediamine.

Selon certains modes de réalisation, le complexe d'organoborane avec une amine est présent dans la partie A à une teneur massique de 5 à 100 %, de préférence de 5 à 50 %, et encore de préférence de 10 à 30 % par rapport au total de la partie A.

Selon certains modes de réalisation, le polymère comprenant au moins un groupement acrylique et au moins un groupement isocyanate est un polyuréthane.

Selon certains modes de réalisation, le polymère comprenant au moins un groupement acrylique et au moins un groupement isocyanate a une masse moléculaire moyenne en nombre de 500 à 50 000 g/mol.

Selon certains modes de réalisation, le polymère comprend de 0,5 à 4 groupements acryliques par mole de polymère, préférentiellement de 1 à 2,5 groupements acryliques par mole de polymère.

Selon certains modes de réalisation, le polymère comprend de 0,5 à 3 groupements isocyanate par mole de polymère, préférentiellement de 1 à 2,5 groupements isocyanate par mole de polymère.

Selon certains modes de réalisation, le groupement acrylique est choisi parmi les esters acryliques et les acrylamides, et de préférence le groupement acrylique est un groupement méthacrylique choisi parmi les esters méthacryliques et les méthacrylamides.

Selon certains modes de réalisation, le polymère comprenant au moins un groupement acrylique et au moins un groupement isocyanate est présent dans la partie B à une teneur massique de 1 à 70 % et de préférence de 1 à 40 % par rapport au total de la partie B.

Selon certains modes de réalisation, le monomère ou oligomère acrylique est un monomère ou oligomère méthacrylique.

Selon certains modes de réalisation, le monomère ou oligomère acrylique est présent à une teneur massique de 0,01 à 70 %, et de préférence de 1 à 60 % par rapport ou total de la partie A et/ou de la partie B de la composition.

Selon certains modes de réalisation, la composition comprend en outre un agent décomplexant pour décomplexer l'organoborane et l'amine, l'agent décomplexant étant un isocyanate.

Selon certains modes de réalisation, l'agent décomplexant est présent dans la partie B de la composition à une teneur massique de 0,01 à 70 %, et de préférence de 0,1 à 40 % par rapport ou total de partie B de la composition.

Selon certains modes de réalisation, la partie A comprend au moins une amine additionnelle choisie parmi une monoamine ou une polyamine, de préférence à une teneur massique de 0,01 à 30 %.

Selon certains modes de réalisation, la composition comprend en outre un ou plusieurs additifs choisis parmi les charges, les plastifiants, les résines tackifiantes, les solvants, les stabilisants UV, les absorbeurs d'humidités, les matériaux fluorescents et les additifs rhéologiques.

Selon certains modes de réalisation, le rapport massique de la partie A sur la partie B est de 0,05 à 10, et de préférence de 0,1 à 1.

L'invention concerne également l'utilisation de la composition décrite ci-dessus, comme adhésif pour lier deux substrats entre eux.

L'invention concerne également l'utilisation de la composition décrite ci-dessus, comme revêtement sur la surface d'un substrat.

L'invention concerne également l'utilisation de la composition décrite ci-dessus, comme primaire sur la surface d'un substrat.

Selon certains modes de réalisation, le substrat ou au moins l'un des deux substrats a une énergie de surface inférieure ou égale à 45 mJ/m², de préférence inférieure ou égale à 40 mJ/m², et encore de préférence inférieure ou égale à 35 mJ/m².

Selon certains modes de réalisation, le substrat ou au moins l'un des deux substrats est constitué de polyoléfine(s), de préférence choisie(s) parmi le polyéthylène, le polypropylène, le polybutène, le polyisoprène, le polybutadiène, le polyfarnesene, le polymyrcène, le polyfluorure de vinyle, le polyfluorure de vinylidène, le polytétrafluoroéthylène ainsi que leurs copolymères ou leurs mélanges.

L'invention concerne également un article comprenant au moins une couche obtenue par réticulation de la composition décrite ci-dessus.

Selon certains modes de réalisation, la couche est une couche adhésive.

L'invention concerne également un procédé de préparation de l'article décrit ci-dessus, comprenant :
- le mélange de la partie A avec la partie B de la composition ; et
- l'enduction de ce mélange sur la surface d'un substrat ;
- optionnellement la mise en contact de cette surface avec la surface d'un substrat additionnel.

L'invention concerne également un procédé de préparation de l'article décrit ci-dessus, comprenant :
- l'enduction d'une des parties A ou B de la composition sur la surface d'un substrat ; et
- l'enduction de la deuxième des parties A ou B de la composition sur la surface du substrat ;
- optionnellement la mise en contact de cette surface avec la surface d'un substrat additionnel.

La présente invention permet de répondre au besoin exprimé ci-dessus. Elle fournit plus particulièrement une composition permettant une adhésion améliorée, notamment sur et entre des substrats ayant une basse énergie de surface, la composition bi-composante comprenant, après réticulation, un réseau de polymère homogène et résistant.

Cela est accompli grâce à l'utilisation d'une composition bi-composante (ou kit) comprenant un polymère ayant à la fois des groupements acryliques et des groupements isocyanate. Ainsi, d'un côté les groupements isocyanate du polymère peuvent réagir avec l'amine du complexe organoborane-amine, et de l'autre côté les groupements acryliques peuvent être polymérisés par l'organoborane. Un seul réseau homogène de polymère est donc créé lors de la réticulation de la composition, ce réseau étant plus résistant et permettant d'obtenir des compositions présentant des propriétés adhésives améliorées.

### Description détaillée

L'invention est maintenant décrite plus en détail et de façon non limitative dans la description qui suit.

L'invention concerne une composition bi-composante comprenant une première partie (partie A) et une deuxième partie (partie B).

### Complexe borane-amine

La composition bi-composante, et plus particulièrement la partie A de la composition bi-composante comprend un complexe d'organoborane avec une amine.

Par « *organoborane* », on entend un composé comprenant au moins un atome de bore lié à au moins un atome de carbone.

L'organoborane selon l'invention peut être de formule (I) : 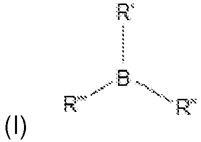
R', R" et R'" peuvent représenter indépendamment un groupement comprenant de 1 à 20 atomes de carbone, de préférence de 1 à 10 atomes de carbone, et encore de préférence de 1 à 5 atomes de carbone. Par exemple, R', R" et R'" peuvent représenter indépendamment un groupement comprenant de 1 à 2 ; ou de 2 à 4 ; ou de 4 à 6 ; ou de 6 à 8 ; ou de 8 à 10 ; ou de 10 à 12 ; ou de 12 à 14 ; ou de 14 à 16 ; ou de 16 à 18 ; ou de 18 à 20 atomes de carbone.
R', R" et R'" peuvent être linéaires ou ramifiés.

Selon certains modes de réalisation, R', R" et R'" peuvent indépendamment être choisis parmi un groupement alkyle, un groupement cycloalkyle, ou un groupement aryle. A titre d'exemple, R', R" et R'" peuvent indépendamment être un groupement méthyle, un groupement éthyle, un groupement n-propyle, un groupement isopropyle, un groupement cyclopropyle, un groupement tert-butyle, un groupement isobutyle, un groupement n-butyle, un groupement sec-butyle, un groupement cyclobutyle, un groupement cyclopentyle, un groupement cyclohexyle, un groupement alkyle substitué par un groupement aryle tel qu'un alkyle phényle, un groupement phényle substitué ou non par un ou plusieurs groupements tels qu'un groupement alkyle ou cycloalkyle, un groupement alkoxy, un halogène, un groupement nitro, et un groupement carbonyle, un groupement naphthyle substitué ou non par un ou plusieurs groupements tels qu'un groupement alkyle ou cycloalkyle, un groupement alkoxy, un halogène, un groupement nitro, et un groupement carbonyle, un groupement hétéroaryle substitué ou non par un ou plusieurs groupements tels qu'un groupement alkyle ou cycloalkyle, un groupement alkoxy, un halogène, un groupement nitro, et un groupement carbonyle . Comme exemples de groupements hétéroaryles on peut citer les pyridines, les pyrroles, les carbazoles, les imidazoles, les furanes, les pyranes, les thiophènes. Alternativement, deux des R', R" et R'" peuvent faire partie d'un cycle.

De préférence, R', R" et R'" sont des groupements alkyle, de préférence de 1 à 5 atomes de carbone.

Selon certains modes de réalisation, les groupements R', R" et R'" sont différents l'un de l'autre.

Selon d'autres modes de réalisation, au moins deux des groupements R', R" et R'" sont identiques.

Selon d'autres modes de réalisation préférés, R', R" et R'" sont identiques. Par exemple, de manière préférée R', R" et R'" peuvent être des groupements éthyle, ou des groupements n-butyle, ou des groupements sec-butyle. Ainsi, de préférence l'organoborane peut être choisi parmi le triéthylborane, le tri-n-butylborane, et le tri-sec-butylborane.

Etant donné que l'organoborane est une molécule hautement réactive, sa complexation avec une amine est nécessaire afin d'éviter sa décomposition et afin de permettre sa conservation.

L'amine peut être une monoamine (comprenant un seul groupement aminé) ou une polyamine (comprenant plus qu'un groupement aminé, par exemple deux, trois ou quatre groupements aminés). Dans le cas des polyamines présentant une chaîne principale, les groupements aminés peuvent être présents aux extrémités de la chaîne principale et/ou sous la forme de groupements latéraux ou pendants le long de la chaîne principale.

Lorsque l'amine est une monoamine, elle peut être choisie parmi une monoamine primaire, secondaire ou tertiaire.

Selon certains modes de réalisation, la monoamine peut être de formule (II) : 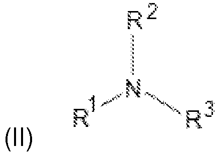 R¹, R² et R³ peuvent représenter indépendamment un atome d'hydrogène ou un groupement comprenant de 1 à 20 atomes de carbone. Ce groupement peut être linéaire ou ramifié, saturé ou insaturé.

Selon certains modes de réalisation, R¹, R² et R³ peuvent indépendamment être choisis parmi un groupement alkyle, un groupement cycloalkyle, un groupement aryle, un groupement alkylaryle ou un groupement arylakyle. A titre d'exemple, R¹, R² et R³ peuvent indépendamment être un groupement méthyle, un groupement éthyle, un groupement n-propyle, un groupement isopropyle, un groupement cyclopropyle, un groupement tert-butyle, un groupement isobutyle, un groupement n-butyle, un groupement sec-butyle, un groupement cyclobutyle, un groupement cyclopentyle, un groupement cyclohexyle, un groupement alkyle substitué par un groupement aryle tel qu'un alkyle phényle, un groupement phényle substitué ou non par un ou plusieurs groupements tels qu'un groupement alkyle ou cycloalkyle, un groupement alkoxy, un halogène, un groupement nitro, et un groupement carbonyle, un groupement naphthyle substitué ou non par un ou plusieurs groupements tels qu'un groupement alkyle ou cycloalkyle, un groupement alkoxy, un halogène, un groupement nitro, et un groupement carbonyle, un groupement hétéroaryle substitué ou non par un ou plusieurs groupements tels qu'un groupement alkyle ou cycloalkyle, un groupement alkoxy, un halogène, un groupement nitro, et un groupement carbonyle. Comme exemples de groupements hétéroaryles on peut citer les pyridines, les pyrroles et les carbazoles. Alternativement, deux des R¹, R² et R³ peuvent faire partie d'un cycle, par exemple d'une pyrrolidine, d'une pipéridine, d'une morpholine, d'une thiomorpholine, ou d'un de leurs homologues supérieurs. Encore alternativement, deux des R¹, R² et R³ peuvent faire partie de plusieurs cycles tel que par exemple le 1-azabicyclo[2.2.2]octane (ou quinuclidine).

Selon certains modes de réalisation, R¹, R² et R³ peuvent être identiques.

Selon d'autres modes de réalisation, R¹, R² et R³ peuvent être différents l'un de l'autre.

Selon certains modes de réalisation, au moins deux des R¹, R² et R³ sont identiques.

Selon certains modes de réalisation, au moins un des R¹, R² et R³ est un hydrogène.

Selon d'autres modes de réalisation, aucun des R¹, R² et R³ n'est un hydrogène.

Selon des modes de réalisation préférés, lorsque la monoamine de formule (II) est une amine primaire, il peut s'agir de la tert-butylamine et la 3-méthoxypropylamine.

Selon des modes de réalisation préférés, lorsque la monoamine de formule (II) est une amine secondaire, il peut s'agir de la diisopropylamine ou de la diéthylamine, et de préférence de la diisopropylamine.

Selon des modes de réalisation préférés, lorsque la monoamine de formule (II) est une amine tertiaire, il peut s'agir de la triéthylamine ou de la diéthylaniline.

Selon d'autres modes de réalisation, la monoamine peut être une polyétheramine, c'est-à-dire une amine comprenant plusieurs fonctions éther.

Selon des modes de réalisation préférés, la monoamine est une polyétheramine primaire.

Selon d'autres modes de réalisation, la monoamine est une polyétheramine secondaire ou tertiaire.

Ainsi, dans le cas où il s'agit d'une monoamine qui est une polyétheramine, elle peut être de formule (III) : 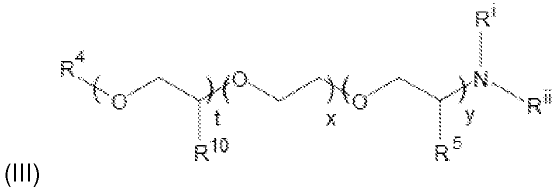 R⁴, R⁵ et R¹⁰ peuvent représenter indépendamment un atome d'hydrogène et un groupement comprenant de 1 à 10 atomes de carbone. Ce groupement peut être linéaire ou ramifié, saturé ou insaturé. De préférence, R⁴, R⁵ et R¹⁰ représentent indépendamment un groupement comprenant de 1 à 10 atomes de carbone, de préférence de 1 à 7 atomes de carbone et encore de préférence de 1 à 3 atomes de carbone linéaire ou ramifié.

Selon certains modes de réalisation R⁴ peut être choisi parmi un groupement alkyle, un groupement cycloalkyle, un groupement arylalkyle, un groupement aryle, ou un groupement alkylaryle, les groupements alkyle, cycloalkyle, alkylaryle, arylalkyle et aryle étant comme décrits ci-dessus.

De préférence, R⁴ est un groupement alkyle, de préférence comprenant de 1 à 7 atomes de carbone, et de préférence de 1 à 3 atomes de carbone.

Selon certains modes de réalisation, R⁵ peut être choisi parmi un groupement alkyle, un groupement cycloalkyle, ou un groupement aryle, ces groupements étant comme décrits ci-dessus. De préférence, R⁵ est un groupement alkyle, de préférence comprenant de 1 à 2 atomes de carbone. Encore de préférence, R⁵ est choisi parmi un groupement méthyle et un groupement éthyle.

Selon certains modes de réalisation R¹⁰ peut être choisi parmi un groupement alkyle, un groupement cycloalkyle, ou un groupement aryle, les groupements alkyle, cycloalkyle et aryle étant comme décrits ci-dessus. De préférence, R¹⁰ est un groupement alkyle, de préférence comprenant de 1 à 2 atomes de carbone. Encore de préférence R¹⁰ est choisi parmi un groupement méthyle et un groupement éthyle.

Selon certains modes de réalisation préférés, R⁴, R⁵ et R¹⁰ peuvent être identiques.

Selon d'autres modes de réalisation, R⁴, R⁵ et R¹⁰ peuvent être différents l'un de l'autre.

Selon des modes de réalisation préférées, R⁵ et R¹⁰ sont différents l'un de l'autre. Par exemple, un des R⁵ et R¹⁰ peut être un groupement éthyle et l'autre des R⁵ et R¹⁰ peut être un groupement méthyle.

Selon des modes de réalisation préférés, au moins un des R⁴, R⁵ et R¹⁰ est un groupement méthyle.

Rⁱ et Rⁱⁱ peuvent représenter indépendamment un atome d'hydrogène ou un groupement comprenant de 1 à 20 atomes de carbone. Ce groupement peut être linéaire ou ramifié, saturé ou insaturé.

Selon certains modes de réalisation, Rⁱ et Rⁱⁱ peuvent indépendamment être choisis parmi un groupement alkyle, un groupement cycloalkyle, un groupement aryle, ou un groupement arylalkyle. A titre d'exemple, Rⁱ et Rⁱⁱ peuvent indépendamment être un groupement méthyle, un groupement éthyle, un groupement n-propyle, un groupement isopropyle, un groupement cyclopropyle, un groupement tert-butyle, un groupement isobutyle, un groupement n-butyle, un groupement sec-butyle, un groupement cyclobutyle, un groupement cyclopentyle, un groupement cyclohexyle, un groupement alkyle substitué par un groupement aryle tel qu'un alkyle phényle, un groupement phényle substitué ou non par un ou plusieurs groupements tels qu'un groupement alkyle ou cycloalkyle, un groupement alkoxy, un halogène, un groupement nitro, et un groupement carbonyle, un groupement naphthyle substitué ou non par un ou plusieurs groupements tels qu'un groupement alkyle ou cycloalkyle, un groupement alkoxy, un halogène, un groupement nitro, et un groupement carbonyle, un groupement hétéroaryle substitué ou non par un ou plusieurs groupements tels qu'un groupement alkyle ou cycloalkyle, un groupement alkoxy, un halogène, un groupement nitro, et un groupement carbonyle. Comme exemples de groupements hétéroaryles on peut citer les pyridines, les pyrroles et les carbazoles. Alternativement, les Rⁱ et Rⁱⁱ peuvent faire partie d'un cycle, par exemple d'une pyrrolidine, d'une pipéridine, d'une morpholine, d'une thiomorpholine, ou d'un de leurs homologues supérieurs.

Selon certains modes de réalisation préférés, Rⁱ et Rⁱⁱ sont tous des atomes d'hydrogène. Dans ce cas, il s'agit d'une polyétheramine primaire.

Selon d'autres modes de réalisation, au moins un des Rⁱ et Rⁱⁱ est un groupement comprenant de 1 à 20 atomes de carbone. Dans ce cas, il s'agit d'une polyétheramine secondaire.

Selon d'autres modes de réalisation, les deux des Rⁱ et Rⁱⁱ sont indépendamment des groupements comprenant de 1 à 20 atomes de carbone. Dans ce cas, il s'agit d'une polyétheramine tertiaire.

Selon certains modes de réalisation t, x et y peuvent représenter indépendamment un nombre de 0 à 90 préférentiellement de 0 à 70, préférentiellement de 0 à 50 et encore plus préférentiellement de 0 à 30. Ainsi, t, x et y peuvent représenter indépendamment un nombre de 0 à 10, ou de 10 à 20 ; ou de 20 à 30 ; ou de 30 à 40 ; ou de 40 à 50 ; ou de 50 à 60 ; ou de 60 à 70 ; ou de 70 à 80 ; ou de 80 à 90.

Quand t est différent de 0, le nombre t représente le nombre de groupements éthoxy substitués par un groupement R¹⁰ (de préférence des groupements propoxy lorsque R¹⁰ est un méthyle ou des groupements butoxy lorsque R¹⁰ est un éthyle) présents dans la monoamine de formule (III).

Le nombre t peut être un nombre entier ou non. Par exemple, si un mélange de différents oxydes d'alkylène est utilisé, t correspond au degré moyen d'éthoxylation des groupements éthoxy substitués par un groupement R¹⁰ (de préférence au degré moyen de propoxylation lorsque R¹⁰ est un méthyle ou de butoxylation lorsque R¹⁰ est un éthyle).

Quand x est différent de 0, le nombre x représente le nombre de groupements éthoxy présents dans la monoamine de formule (III).

Le nombre x peut être un nombre entier ou non. Par exemple, si un mélange de différents oxydes d'alkylène est utilisé, x correspond au degré moyen d'éthoxylation.

Quand y est différent de 0, le nombre y représente le nombre de groupements éthoxy substitués par un groupement R⁵ (de préférence des groupements propoxy lorsque R⁵ est un méthyle ou des groupements butoxy lorsque R⁵ est un éthyle) présents dans la monoamine de formule (III).

Le nombre y peut être un nombre entier ou non. Par exemple, si un mélange de différents oxydes d'alkylène est utilisé, y correspond au degré moyen d'éthoxylation des groupements éthoxy substitués par un groupement R⁵ (de préférence au degré moyen de propoxylation lorsque R⁵ est un méthyle ou de butoxylation lorsque R⁵ est un éthyle).

Lorsque t et y sont différents de 0, la somme t + y représente le nombre de groupements éthoxy substitués par les groupements R⁵ et R¹⁰ (de préférence des groupements propoxy lorsque R⁵ et R¹⁰ sont des méthyles ou des groupements butoxy lorsque R⁵ et R¹⁰ sont des éthyles) présents dans l'amine de formule (III).

Selon certains modes de réalisation, lorsque t est égal à 0, y est différent de 0.

Selon d'autres modes de réalisation, lorsque y est égal à 0, t est différent de 0.

Selon encore d'autres modes de réalisation, notamment lorsque R⁵ et R¹⁰ sont différents, t et y sont tous les deux différents de 0.

Selon certains modes de réalisation, lorsque y et/ou t est égal à 0, x est différent de 0.

Selon d'autres modes de réalisation, lorsque x est égal à 0, y et/ou t est différent de 0.

Les monoamines de formule (III) peuvent avoir une masse moléculaire de 200 à 5500 g/mol, et de préférence de 500 à 2 500 g/mol. Par exemple, les monoamines de formule (III) peuvent avoir une masse moléculaire de 200 à 500 g/mol ; ou de 500 à 750 g/mol ; ou de 750 à 1 000 g/mol ; ou de 1 000 à 1 250 g/mol ; ou de 1 250 à 1 500 g/mol ; ou de 1 500 à 1 750 g/mol ; ou de 1 750 à 2 000 g/mol ; ou de 2 000 à 2 250 g/mol ; ou de 2 250 à 2 500 g/mol ; ou de 2 500 à 2 750 g/mol ; ou de 2 750 à 3 000 g/mol ; ou de 3 000 à 3 250 g/mol ; ou de 3 250 à 3 500 g/mol ; ou de 3 500 à 3 750 g/mol ; ou de 3 750 à 4 000 g/mol ; ou de 4 000 à 4 250 g/mol ; ou de 4 250 à 4 500 g/mol ; ou de 4 500 à 4 750 g/mol ; ou de 4 750 à 5 000 g/mol ; ou de 5 000 à 5 250 g/mol ; ou de 5 250 à 5 500 g/mol.

Ce type de polyétheramines est par exemple commercialisé sous le nom « *Jeffamine serie M* » par la société HUNTSMAN.

Lorsque l'amine est une polyamine, elle peut être choisie parmi une polyamine primaire et/ou secondaire et/ou tertiaire. De préférence, il s'agit d'une polyamine primaire, c'est-à-dire que tous ses groupements aminés sont primaires. Encore de préférence il s'agit d'une diamine. Toutefois, des polyamines comprenant plus que deux groupements aminés (par exemple trois ou quatre) telles que les polyéthylène imines (PEI) peuvent être utilisées.

Selon certains modes de réalisation, la polyamine peut être de formule (IV) : 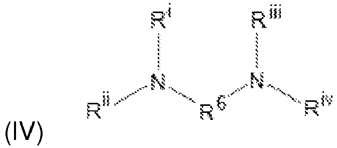
R⁶ peut représenter un groupement divalent comprenant de 2 à 60 atomes de carbone, de préférence de 2 à 40 atomes de carbones et de préférence encore de 2 à 15 atomes de carbone.
R⁶ peut être linéaire ou ramifié, cyclique ou alicyclique, saturé ou insaturé.
R⁶ peut comprendre un ou plusieurs hétéroatomes tels qu'un atome d'oxygène, un atome de soufre, un atome d'azote ou un halogène. De préférence un seul hétéroatome peut être compris dans R⁶.

De plus, R⁶ peut être choisi parmi un radical divalent alkyle, un radical divalent cycloalkyle, un radical divalent alicyclique, un radical divalent arylalkyle ou un radical divalent aryle. De préférence, R⁶ est un groupement alkyle.

Rⁱ et Rⁱⁱ sont comme détaillés ci-dessus.

Rⁱⁱⁱ et R^{iv} peuvent représenter indépendamment un atome d'hydrogène ou un groupement comprenant de 1 à 20 atomes de carbone. Ce groupement peut être linéaire ou ramifié, saturé ou insaturé.

Selon certains modes de réalisation, Rⁱⁱⁱ et R^{iv} peuvent indépendamment être choisis parmi un groupement alkyle, un groupement cycloalkyle, un groupement aryle, ou un groupement arylalkyle. A titre d'exemple, Rⁱⁱⁱ et R^{iv} peuvent indépendamment être un groupement méthyle, un groupement éthyle, un groupement n-propyle, un groupement isopropyle, un groupement cyclopropyle, un groupement tert-butyle, un groupement isobutyle, un groupement n-butyle, un groupement sec-butyle, un groupement cyclobutyle, un groupement cyclopentyle, un groupement cyclohexyle, un groupement alkyle substitué par un groupement aryle tel qu'un alkyle phényle, un groupement phényle substitué ou non par un ou plusieurs groupements tels qu'un groupement alkyle ou cycloalkyle, un groupement alkoxy, un halogène, un groupement nitro, et un groupement carbonyle, un groupement naphthyle substitué ou non par un ou plusieurs groupements tels qu'un groupement alkyle ou cycloalkyle, un groupement alkoxy, un halogène, un groupement nitro, et un groupement carbonyle, un groupement hétéroaryle substitué ou non par un ou plusieurs groupements tels qu'un groupement alkyle ou cycloalkyle, un groupement alkoxy, un halogène, un groupement nitro, et un groupement carbonyle. Comme exemples de groupements hétéroaryles on peut citer les pyridines, les pyrroles et les carbazoles. Alternativement, les Rⁱⁱⁱ et R^{iv} peuvent faire partie d'un cycle, par exemple d'une pyrrolidine, d'une pipéridine, d'une morpholine, d'une thiomorpholine, ou d'un de leurs homologues supérieurs.

Selon certains modes de réalisation préférés, Rⁱ et Rⁱⁱ et/ou Rⁱⁱⁱ et R^{iv} sont tous des atomes d'hydrogène.

Selon d'autres modes de réalisation, au moins un des Rⁱ et Rⁱⁱ et/ou au moins un des Rⁱⁱⁱ et R^{iv} est un groupement comprenant de 1 à 20 atomes de carbone.

Selon d'autres modes de réalisation, les deux des Rⁱ et Rⁱⁱ et/ou les deux des Rⁱⁱⁱ et R^{iv} sont indépendamment des groupements comprenant de 1 à 20 atomes de carbone.

Selon des modes de réalisation préférés, la polyamine de formule (IV) peut être choisi parmi l'éthylènediamine, la 1,3-propanediamine, la 1,5-pentanediamine, la 1,6-hexanediamine, la 1,12-dodecanediamine, la 2-méthyl-1,5-pentanediamine la 3-méthyl-1,5-pentanediamine, l'isophoronediamine la 4,4'-méthylènedianiline, la 2-méthylbenzène-1,4-diamine, la diéthylenetriamine, la 4,6-diéthyl-2-méthylbenzene-1,3-diamine, la 4,4'-méthylèndicyclohexanamine, la 2,4,6-triméthyl-1,3-phénylènediamine, la naphthalène-1,8-diamine.

Encore de préférence, la polyamine de formule (IV) peut être choisi parmi l'éthylènediamine, la 1,3-propanediamine et la 1,6-hexanediamine, et de préférence la polyamine de formule (IV) est la 1 ,3-propanediamine ou la 1,6-hexanediamine.

Selon d'autres modes de réalisation, la polyamine peut être une polyétheramine comprenant deux groupements aminés, de préférence primaire. Alternativement, la polyamine peut être une polyamine secondaire ou tertiaire comprenant deux groupements aminés.

Ainsi, lorsqu'il s'agit d'une polyétheramine comprenant deux groupements aminés, elle peut avoir une formule (V) :

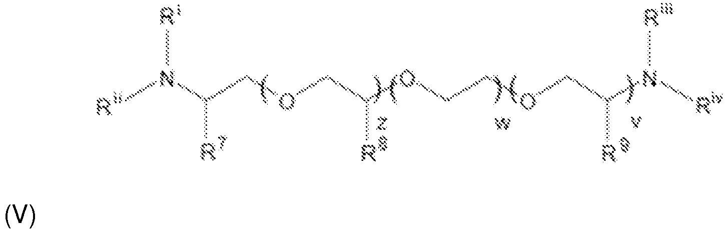

R⁷, R⁸ et R⁹ peuvent représenter indépendamment un groupement comprenant de 1 à 10 atomes de carbone, de préférence de 1 à 6 atomes de carbone, et encore de préférence de 1 à 2 atomes de carbone. Ces groupements peuvent être linéaires ou ramifiés, saturés ou insaturés.

R⁷, R⁸ et R⁹ peuvent indépendamment être choisis parmi un groupement alkyle, un groupement cycloalkyle, ou un groupement aryle, ces groupements étant comme décrits ci-dessus. De préférence, au moins un des R⁷, R⁸ et R⁹ est un groupement alkyle, et encore de préférence un groupement méthyle ou un groupement éthyle.

Selon certains modes de réalisation préférés, R⁷, R⁸ et R⁹ peuvent être identiques.

Selon d'autres modes de réalisation, R⁷, R⁸ et R⁹ peuvent être différents l'un de l'autre.

Selon des modes de réalisation préférés, au moins un des R⁷, R⁸ et R⁹ est un groupement méthyle, et de préférence les R⁷, R⁸ et R⁹ sont des groupements méthyles.

Selon des modes de réalisation préférées, R⁸ et R⁹ sont différents l'un de l'autre.

Selon d'autres modes de réalisation, au moins un des R⁸ et R⁹ est un groupement méthyle et l'autre des R⁸ et R⁹ est un groupement éthyle.

Selon d'autres modes de réalisation, au moins un des R⁸ et R⁹ est un groupement méthyle et l'autre des R⁸ et R⁹ est un groupement éthyle.

Rⁱ, Rⁱⁱ, Rⁱⁱⁱ et R^{iv} sont tels que détaillés ci-dessus.

Selon certains modes de réalisation préférés, Rⁱ et Rⁱⁱ et/ou Rⁱⁱⁱ et R^{iv} sont tous des atomes d'hydrogène.

Selon d'autres modes de réalisation, au moins un des Rⁱ et Rⁱⁱ et/ou au moins un des Rⁱⁱⁱ et R^{iv} est un groupement comprenant de 1 à 20 atomes de carbone.

Selon d'autres modes de réalisation, les deux des Rⁱ et Rⁱⁱ et/ou les deux des Rⁱⁱⁱ et R^{iv} sont indépendamment des groupements comprenant de 1 à 20 atomes de carbone.

Selon certains modes de réalisation v, w et z peuvent représenter indépendamment un nombre de 0 à 90 préférentiellement de 0 à 70. Ainsi v, w et z peuvent représenter indépendamment un nombre de 0 à 10, ou de 10 à 20 ; ou de 20 à 30 ; ou de 30 à 40 ; ou de 40 à 50 ; ou de 50 à 60 ; ou de 60 à 70 ; ou de 70 à 80 ; ou de 80 à 90.

Selon certains modes de réalisation, z est égal à 0 et v est différent de 0.

Selon d'autres modes de réalisation, z est différent de 0 et v est égal à 0.

Selon encore d'autres réalisation, z et v sont tous les deux différents de 0.

Lorsque z et v sont différents de 0, la somme z + v représente le nombre de groupements éthoxy substitués (de préférence des groupements propoxy ou butoxy) présents dans la polyamine de formule (V).

La somme z + v peut être un nombre entier ou non. Par exemple, si un mélange de différents oxydes d'alkylène est utilisé, z + v correspond au degré moyen d'éthoxylation des groupements éthoxy substitués par R⁸ et R⁹ (de préférence au degré de propoxylation ou de butoxylation).

Lorsque v est égal à 0, le nombre z représente le nombre de groupements éthoxy substitués par R⁸ (de préférence des groupements propoxy lorsque R⁸ est un méthyle ou des groupements butoxy lorsque R⁸ est un éthyle) présents dans la polyamine de formule (V).

Lorsque z est égal à 0, le nombre v représente le nombre groupements éthoxy substitués par R⁹ (de préférence des groupements propoxy lorsque R⁹ est un méthyle ou des groupements butoxy lorsque R⁹ est un éthyle) présents dans la polyamine de formule (V).

Les nombres z et v peuvent être des nombres entiers ou non.

Le nombre w représente le nombre de groupements éthoxy présents dans la polyamine.

Le nombre w peut être un nombre entier ou non. Par exemple, si un mélange de différentes molécules est utilisé, w correspond au degré moyen d'éthoxylation.

Selon certains modes de réalisation, v et w peuvent être 0. Ce type de polyétheramines est par exemple commercialisé sous le nom « *Jeffamine serie D* » et « *Jeffamine serie SD* » par la société HUNTSMAN.

Selon d'autres modes de réalisation, w peut être égal à 0, alors que v est supérieur à 0.

Selon d'autres modes de réalisation, v et w peuvent être supérieurs à 0. Ce type de polyétheramines est par exemple commercialisé sous le nom « *Jeffamine serie ED* » par la société HUNTSMAN.

Les polyétheramines de formule (V) peuvent avoir une masse moléculaire de 100 à 5 000 g/mol, de préférence de 200 à 4 000 g/mol, de préférence 200 à 2 000 g/mol et de préférence 200 à 1 000 g/mol. Par exemple, les polyétheramines de formule (V) peuvent avoir une masse moléculaire de 100 à 500 g/mol ; ou de 500 à 750 g/mol ; ou de 750 à 1 000 g/mol ; ou de 1 000 à 1 250 g/mol ; ou de 1 250 à 1 500 g/mol ; ou de 1 500 à 1 750 g/mol ; ou de 1 750 à 2 000 g/mol ; ou de 2 000 à 2 250 g/mol ; ou de 2 250 à 2 500 g/mol ; ou de 2 500 à 2 750 g/mol ; ou de 2 750 à 3 000 g/mol ; ou de 3 000 à 3 250 g/mol ; ou de 3 250 à 3 500 g/mol ; ou de 3 500 à 3 750 g/mol ; ou de 3 750 à 4 000 g/mol ; ou de 4 000 à 4 250 g/mol ; ou de 4 250 à 4 500 g/mol ; ou de 4 500 à 4 750 g/mol ; ou de 4 750 à 5 000 g/mol.

Selon d'autres modes de réalisation, la polyétheramine comprenant deux groupements aminés peut avoir une formule (VI) : 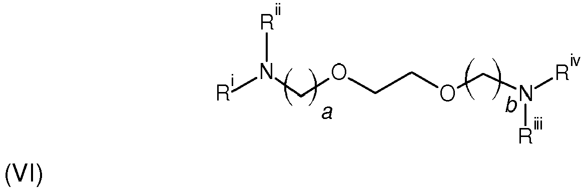 Rⁱ, Rⁱⁱ, Rⁱⁱⁱ et R^{iv} sont tels que décrits ci-dessus.

Selon certains modes de réalisation préférés, Rⁱ et Rⁱⁱ et/ou Rⁱⁱⁱ et R^{iv} sont tous des atomes d'hydrogène.

Selon d'autres modes de réalisation, au moins un des Rⁱ et Rⁱⁱ et/ou au moins un des Rⁱⁱⁱ et R^{iv} est un groupement comprenant de 1 à 20 atomes de carbone.

Selon d'autres modes de réalisation, les deux des Rⁱ et Rⁱⁱ et/ou les deux des Rⁱⁱⁱ et R^{iv} sont indépendamment des groupements comprenant de 1 à 20 atomes de carbone.

Selon certains modes de réalisation, a et b peuvent représenter indépendamment un nombre de 1 à 20 et de préférence de 2 à 11. Selon certains modes de réalisation préférés, a et b sont identiques. De préférence a et b sont égaux à 2 ou 3.

Selon d'autres modes de réalisation, a et b sont différents. Dans ce cas, ou moins un des a et b est de préférence égal à 2 ou 3.

Les polyétheramines de formule (VI) peuvent avoir une masse moléculaire de 150 à 1 500 g/mol, de préférence de 150 à 1 000 g/mol, et de préférence 150 à 500 g/mol. Par exemple, les polyétheramines de formule (VI) peuvent avoir une masse moléculaire de 150 à 160 g/mol ; ou de 160 à 170 g/mol ; ou de 170 à 180 g/mol ; ou de 180 à 190 g/mol ; ou de 190 à 200 g/mol ; ou de 200 à 300 g/mol ; ou de 300 à 400 g/mol ; ou de 400 à 500 g/mol ; ou de 500 à 600 g/mol ; ou de 600 à 700 g/mol ; ou de 700 à 800 g/mol ; ou de 800 à 900 g/mol ; ou de 900 à 1 000 g/mol ; ou de 1 000 à 1 100 g/mol ; ou de 1 100 à 1 200 g/mol ; ou de 1 200 à 1 300 g/mol ; ou de 1 300 à 1 400 g/mol ; ou de 1 400 à 1 500 g/mol .

Ce type de polyétheramines (formule (VI)) est par exemple commercialisé sous le nom « *Jeffamine serie EDR* » par la société HUNTSMAN.

Selon d'autres modes de réalisation, la polyamine peut être une polyétheramine primaire comprenant trois groupements aminés. Alternativement, la polyamine peut être une polyamine secondaire ou tertiaire comprenant trois groupements aminés.

Ainsi, lorsqu'il s'agit d'une polyétheramine comprenant trois groupements aminés, elle peut avoir une formule (VII) : 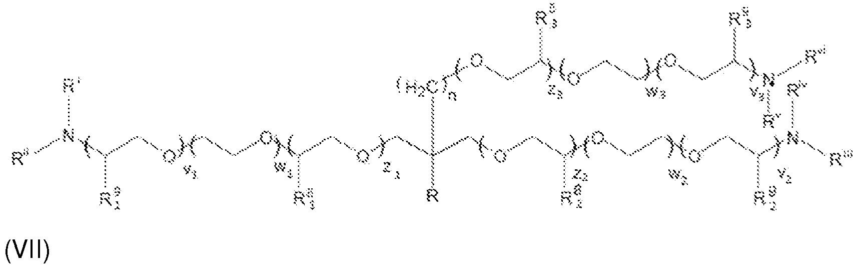
R₁⁸, R₁⁹, R₂⁸, R₂⁹, R₂⁹, R₃⁸, et R₃⁹ peuvent représenter indépendamment un groupement comprenant de 1 à 10 atomes de carbone, de préférence de 1 à 6 atomes de carbone, et encore de préférence de 1 à 2 atomes de carbone. Ces groupements peuvent être linéaires ou ramifiés, saturés ou insaturés.
R₁⁸, R₁⁹, R₂⁸, R₂⁹, R₂⁹, R₃⁸, et R₃⁹ peuvent indépendamment être choisis parmi un groupement alkyle, un groupement cycloalkyle, ou un groupement aryle, ces groupements étant comme décrits ci-dessus. De préférence, au moins un des R₁⁸, R₁⁹, R₂⁸, R₂⁹, R₂⁹, R₃⁸, et R₃⁹ est un groupement alkyle. De préférence encore R₁⁸, R₁⁹, R₂⁸, R₂⁹, R₂⁹, R₃⁸, et R₃⁹ sont choisi parmi un groupement méthyle ou un groupement éthyle.

Selon certains modes de réalisation préférés, R₁⁸, R₁⁹, R₂⁸, R₂⁹, R₂⁹, R₃⁸, et R₃⁹ peuvent être identiques, par exemple ils sont tous un groupement de méthyle.

Selon d'autres modes de réalisation, R₁⁸, R₁⁹, R₂⁸, R₂⁹, R₂⁹, R₃⁸, et R₃⁹ peuvent être différents l'un de l'autre.

Selon certains modes de réalisation, R₁⁸ est différent de R₂⁸ et/ou de R39.

Selon certains modes de réalisation, R₁⁹ est différent de R₂⁹ et/ou de R39.

Selon des modes de réalisation préférés, au moins un des R₁⁸, R₁⁹ et/ou au moins un des R₂⁸, R₂⁹ et/ou au moins un des R₃⁸, R₃⁹ et/ou est un groupement méthyle et l'autre des R₁⁸, R₁⁹ et/ou des R₂⁸, R₂⁹ et/ou des R₃⁸, R₃⁹ et/ou est un groupement éthyle.

R peut représenter un atome d'hydrogène et un groupement comprenant de 1 à 10 atomes de carbone, et de préférence de 1 à 3 atomes de carbone. Ce groupement peut être linéaire ou ramifié.

Selon certains modes de réalisation R peut être choisi parmi un groupement alkyle, un groupement cycloalkyle, ou un groupement aryle, les groupements alkyle, cycloalkyle, aryle ou arylakyle étant comme décrits ci-dessus.

Lorsque R est un groupement comprenant de 1 à 10 atomes de carbone, il est de préférence un groupement alkyle, de préférence comprenant de 1 à 3 atomes de carbone, et de préférence de 1 à 2 atomes de carbone.

Selon certains modes de réalisation R est un atome d'hydrogène.

Selon d'autres modes de réalisation, R est un groupement éthyle.

Rⁱ, Rⁱⁱ, Rⁱⁱⁱ et R^{iv} sont aussi tels que détaillés ci-dessus.

Selon certains modes de réalisation, z₁, z₂ et z₃ peuvent représenter un nombre de 0 à 80, et de préférence de 0 à 70. Par exemple, z₁, z₂ et z₃ peuvent être de 0 à 5 ; ou de 5 à 10 ; ou de 10 à 15 ; ou de 15 à 20 ; ou de 20 à 25 ; ou de 25 à 30 ; ou de 30 à 35 ; ou de 35 à 40 ; ou de 40 à 45 ; ou de 45 à 50 ; ou de 50 à 55 ; ou de 55 à 60 ; ou de 60 à 65 ; ou de 65 à 70 ; ou de 70 à 75 ; ou de 75 à 80. Les nombres z₁, z₂ et z₃ peuvent être un nombre entier ou non.

Selon certains modes de réalisation, w₁, w₂, et w₃ peuvent représenter un nombre de 0 à 50, et de préférence de 0 à 40. Par exemple, w₁, w₂, et w₃ peuvent être de 0 à 5 ; ou de 5 à 10 ; ou de 10 à 15 ; ou de 15 à 20 ; ou de 20 à 25 ; ou de 25 à 30 ; ou de 30 à 35 ; ou de 35 à 40. Les nombres w₁, w₂, et w₃ peuvent être un nombre entier ou non.

Selon certains modes de réalisation, v₁, v₂ et v₃ peuvent représenter un nombre de 0 à 20, et de préférence de 0 à 10. Par exemple, v₁, v₂ et v₃ peuvent être de 0 à 2 ; ou de 2 à 4 ; ou de 4 à 6 ; ou de 6 à 8 ; ou de 8 à 10 ; ou de 10 à 12 ; ou de 12 à 14 ; ou de 14 à 16 ; ou de 16 à 18 ; ou de 18 à 20. Les nombres v₁, v₂ et v₃ peuvent être un nombre entier ou non.

Selon certains modes de réalisation, au moins un des z₁, z₂ et z₃ est différent de 0.

Selon certains modes de réalisation, au moins un des v₁, v₂ et v₃ est différent de 0.

Selon d'autres modes de réalisation, au moins un des z₁, z₂ et z₃ est différent de 0 et v₁, v₂ et v₃ sont égaux à 0.

Selon certains modes de réalisation, au moins un des w₁, w₂ et w₃ est différent de 0.

Selon d'autres modes de réalisation, au moins un des w₁, w₂ et w₃ est égal à 0, de préférence au moins deux des w₁, w₂ et w₃ et de préférence les trois w₁, w₂ et w₃ sont égaux à 0.

Selon certains modes de réalisation, au moins un des v₁, et z₁ est égal à 0 et/ou au moins un des v₂, et z₂ est égal à 0 et/ou au moins un des v₃, et z₃ est égal à 0.

Selon des modes de réalisation préférés au moins un des v₁, et z₁ est égal à 0 et/ou au moins un des v₂, et z₂ est égal à 0 et/ou au moins un des v₃, et z₃ est égal à 0 et au moins un des w₁, w₂ et w₃ est égal à 0, de préférence au moins deux des w₁, w₂ et w₃ et de préférence les trois w₁, w₂ et w₃ sont égaux à 0.

La somme w₁ + w₂ + w₃ représente le nombre de groupements éthoxy présents dans la polyamine de formule (VII).

La somme v₁ + v₂ + v₃ + z₁ + z₂ + z₃ représente le nombre de groupements éthoxy substitués par R₁⁸, R₁⁹, R₂⁸, R₂⁹, R₃⁸ et R₃⁹ (de préférence des groupements propoxy ou butoxy) présents dans la polyamine de formule (VII).

La somme v₁ + v₂ + v₃ + z₁ + Z2 + z₃ peut être un nombre entier ou non. Par exemple, si un mélange de différents oxydes d'alkylène est utilisé, cette somme correspond au degré moyen d'éthoxylation des groupements éthoxy substitués par R₁⁸, R₁⁹, R₂⁸, R₂⁹, R₃⁸ et R₃⁹ (de préférence au degré de propoxylation et/ou de butoxylation).

Les sommes z₁ + z₂ + z₃, v₁ + v₂ + v₃ et w₁ + w₂ + w₃ peuvent représenter indépendamment un nombre de 0 à 90, préférentiellement de 0 à 70, préférentiellement de 0 à 50 et encore plus préférentiellement de 0 à 30. Ainsi, ce nombre peut être de 0 à 10 ; ou de 10 à 20 ; ou de 20 à 30 ; ou de 30 à 40 ; ou de 40 à 50 ; ou de 50 à 60 ; ou de 60 à 70 ; ou de 70 à 80 ; ou de 80 à 90.

Selon certains modes de réalisation, lorsque w₁, w₂, w₃, z₁, z₂ et z₃ sont égaux à 0, v₁ + v₂ + v₃ peut être de 2 à 90, et de préférence de 4 à 90. Par exemple, cette somme peut être de 2 à 5 ; ou de 5 à 10 ; ou de 10 à 20 ; ou de 20 à 30 ; ou de 30 à 40 ; ou de 40 à 50 ; ou de 50 à 60 ; ou de 60 ou 70 ; ou de 70 à 80 ; ou 80 à 90.

Le nombre n peut représenter un nombre de 0 à 30, de préférence de 1 à 20, et encore de préférence de 1 à 10. Par exemple, n peut être de 0 à 5 ; ou de 5 à 10 ; ou de 10 à 15 ; ou de 15 à 20 ; ou de 20 à 25 ; ou de 25 à 30.

Selon certains modes de réalisation préférés, n peut être 0 ou 1.

Les polyétheramines de formule (VII) peuvent avoir une masse moléculaire de 300 à 6000 g/mol, de préférence de 300 à 5000 g/mol, de préférence de 300 à 4000 g/mol et de préférence de 300 à 3000 g/mol. Par exemple, les polyétheramines de formule (VII) peuvent avoir une masse moléculaire de 300 à 500 g/mol ; ou de 500 à 750 g/mol ; ou de 750 à 1 000 g/mol ; ou de 1 000 à 1 250 g/mol ; ou de 1 250 à 1 500 g/mol ; ou de 1 500 à 1 750 g/mol ; ou de 1 750 à 2 000 g/mol ; ou de 2 000 à 2 250 g/mol ; ou de 2 250 à 2 500 g/mol ; ou de 2 500 à 2 750 g/mol ; ou de 2 750 à 3 000 g/mol ; ou de 3 000 à 3 250 g/mol ; ou de 3 250 à 3 500 g/mol ; ou de 3 500 à 3 750 g/mol ; ou de 3 750 à 4 000 g/mol ; ou de 4 000 à 4 250 g/mol ; ou de 4 250 à 4 500 g/mol ; ou de 4 500 à 4 750 g/mol ; ou de 4 750 à 5 000 g/mol ; ou de 5 000 à 5 250 g/mol ; ou de 5 250 à 5 500 g/mol ; ou de 5 500 à 5 750 g/mol ; ou de 5 750 à 6 000 g/mol.

Ce type de polyétheramines (formule (VII)) est par exemple commercialisé sous le nom « *Jeffamine serie T* » et « *Jeffamine serie ST* » par la société HUNTSMAN.

Dans l'ensemble des formules ci-dessus, les groupements d'indices t, x, y, v, w, z, vᵢ, wᵢ, zᵢ, peuvent être adjacents ou non dans la molécule. Par exemple, des groupements éthoxy peuvent alterner de manière aléatoire (selon une certaine distribution statistique) avec des groupements propoxy et/ou butoxy le long d'une même chaîne.

Alternativement, d'autres types de polyamines pouvant être utilisées dans le cadre de la présente invention sont les polyéthylèneimines (ou polyaziridines) c'est-à-dire un polymère comprenant un motif répétitif composé du groupe amine et du groupement biradical « -CH₂CH₂- » Ce types de polyamines peuvent être linéaires, ramifiées ou dendrimères. Des exemples incluent la tetraéthylènepentamine, l'EPOMIN SP012 ainsi que les polyéthylèneimines sous le nom LUPASOL^{®} (notamment LUPASOL^{®} FG) commercialsées par la société BASF.

Selon l'invention, l'organoborane peut former un complexe avec l'amine, avec un rapport molaire d'organoborane sur l'amine de 0,1 à 10, et de préférence de 0,5 à 5. De préférence, ce ratio est de 0,5 à 2. Ce ratio peut notamment être de 0,1 à 0,5 ; ou de 0,5 à 1 ; ou de 1 à 2 ; ou de 2 à 4 ; ou de 4 à 6 ; ou de 6 à 8 ; ou de 8 à 10. Par exemple, lorsqu'il s'agit d'une monoamine, ce rapport est de préférence d'environ 1. En revanche, lorsqu'il s'agit d'une diamine, ce rapport est de préférence d'environ 2.

Selon certains modes de réalisation préférés, le complexe organoborane-amine peut être choisi parmi le triéthylborane-1,3-propanediamine, le tri-n-butylborane-3-méthoxypropylamine, le triéthylborane-diéthylènetriamine, le tri-n-butylborane-1,3-propanediamine, le tri-sec-butylborane-1,3-propanediamine et le triéthylborane-1,6-hexanediamine.

Le complexe organoborane-amine peut être présent dans la partie A de la composition à une teneur massique de 5 à 100 %, de préférence de 5 à 50 %, et encore de préférence de 10 à 30 % par rapport à la masse totale de la partie A de la composition. Cette teneur peut être notamment de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 100 %.

Plus particulièrement, la teneur en complexe organoborane-amine doit être suffisante afin de permettre une réaction complète. De l'autre côté, une teneur élevée en complexe organoborane-amine risque de conduire à une réaction rapide, ce qui empêcherait le mélange efficace de la partie A avec la partie B.

Selon certains modes de réalisation préférés, le complexe organoborane-amine peut être préparé avant son introduction dans la partie A de la composition. Cette préparation peut être effectuée par exemple en faisant réagir une amine telle que décrite ci-dessus, avec un composé organoborane sous des conditions inertes.

L'organoborane compris dans le complexe organoborane-amine peut initier une polymérisation radicalaire après avoir été activé, c'est-à-dire décomplexé de l'amine.

### Polymère avec des groupements acryliques et des groupements isocyanate

La composition bi-composante, et plus particulièrement la partie B de la composition bi-composante, comprend un polymère comprenant au moins un groupement acrylique et au moins un groupement isocyanate. De préférence le groupement acrylique est un groupement méthacrylique. Par « *polymère* » on entend une molécule constituée de la répétition de sous-unités ou monomères.

Par « *groupement isocyanate* » on entend un groupement ayant la formule (VIII) :

(VIII) -N=C=O

Par « *groupement acrylique* » on entend un groupement ayant la formule (IX) :

(IX) -X-(C=O)-CH(R^{V})=CH₂

R^{V} peut représenter un atome d'hydrogène ou un radical méthyle, et de préférence un radical méthyle, et X peut représenter -O- ou -NR'^{N}- avec R'^{N} représentant un atome d'hydrogène ou un radical alkyle linéaire ou ramifié comprenant de 1 à 22 atomes de carbone, de préférence de 1 à 18, préférentiellement de 1 à 14, et encore plus avantageusement de 1 à 8 atomes de carbones. De préférence, X peut représenter -O-. De préférence le groupement acrylique peut être choisi parmi les esters acryliques et les acrylamides, et encore de préférence le groupement acrylique peut être un groupement méthacrylique choisi parmi les esters méthacryliques et les méthacrylamides.

Selon certains modes de réalisation, le(s) groupement(s) isocyanate(s) sont présents aux extrémités de la chaîne principale du polymère, et les le(s) groupement(s) acrylique(s) sont présents sous forme de groupements latéraux le long de la chaîne principale et/ou aux extrémités de la chaîne principale du polymère.

Selon certains modes de réalisation, le(s) groupement(s) acrylique(s) et le(s) groupement(s) isocyanate(s) sont présents aux extrémités du polymère, c'est-à-dire aux extrémités de la chaîne principale du polymère.

Le polymère comprenant au moins un groupement acrylique et au moins un groupement isocyanate peut avoir une masse moléculaire moyenne (Mn) en nombre de 500 à 50 000 g/mol. Par exemple la masse moléculaire moyenne en nombre (Mn) du polymère peut être de 500 à 1 000 g/mol ; 1 000 à 2 000 g/mol ; ou de 2 000 à 3 000 g/mol ; ou de 3 000 à 4 000 g/mol ; ou de 4 000 à 5 000 g/mol ; ou de 5 000 à 6 000 g/mol ; ou de 6 000 à 7 000 g/mol ; ou de 7 000 à 8 000 g/mol ; ou de 8 000 à 9 000 g/mol ; ou de 9 000 à 10 000 g/mol ; ou de 10 000 à 15 000 g/mol ; ou de 15 000 à 20 000 g/mol ; ou de 20 000 à 25 000 g/mol ; ou de 25 000 à 30 000 g/mol ; ou de 30 000 à 35 000 g/mol ; ou de 35 000 à 40 000 g/mol ; ou de 40 000 à 45 000 g/mol ; ou de 45 000 à 50 000 g/mol. La masse moléculaire moyenne en nombre peut être mesurée par chromatographie par perméation de gel (CPG).

Selon des modes de réalisation préférés, le polymère est un polyuréthane, ainsi le polyuréthane comprend au moins un groupement acrylique et au moins un groupement isocyanate.

Selon un premier mode de réalisation, ce polyuréthane peut être obtenu selon le procédé en deux étapes décrit dans la demande WO 2017/108531. Ainsi, ce polyuréthane peut être obtenu par réaction d'un polyéther-acrylate hydroxylé, d'un polyester-acrylate hydroxylé ou d'un polycarbonate-acrylate hydroxylé et d'au moins un polyisocyanate.

Selon un second mode de réalisation, ce polyuréthane peut être synthétisé selon le procédé en deux étapes décrit dans le document WO 2019/011784. Ainsi, ce polyuréthane peut être obtenu par réaction d'un polyuréthane comprenant au moins deux fonctions terminales -NCO (de préférence aux extrémités de la chaîne principale), et d'au moins composé choisi parmi un ester hydroxylé de l'acide acrylique ou méthacrylique ou un amide hydroxylé de l'acide acrylique ou méthacrylique.

Dans le cadre de l'invention, on entend par « *ester hydroxylé de l'acide acrylique ou méthacrylique* », un ester de l'acide acrylique ou de l'acide méthacrylique dont le radical ester est substitué par au moins un groupe hydroxyle. On peut par exemple représenter un ester hydroxylé de l'acide (méth)acrylique par la formule suivante :

CH₂=CR^{V}-C(=O)-O-R^{O}

R^{V} peut être comme décrit ci-dessus, et R° peut représenter un radical organique substitué par au moins un groupe hydroxyle.

Selon certains modes de réalisation, l'ester hydroxylé de l'acide acrylique ou méthacrylique a la formule (X) suivante :

(X) CH₂=CR^{V}-C(=O)-O-R^{AC}-OH

R^{V} peut être comme décrit ci-dessus, et R^{AC} peut représenter un radical hydrocarboné divalent linéaire ou ramifié, aliphatique ou cyclique, saturé ou insaturé. R^{AC} peut comprendre de préférence de 2 à 240 atomes de carbone, et/ou peut éventuellement être interrompu par un ou plusieurs hétéroatomes (tel que par exemple N, O, S, et en particulier O), et/ou peut éventuellement être interrompu par un ou plusieurs groupes divalents - N(R"^{N})- avec R"^{N} représentant un radical alkyle linéaire ou ramifié comprenant de 1 à 22 atomes de carbone (amine tertiaires), -C(=O)O-(ester), -C(=O)NH- (amide), -NHC(=O)O- (carbamate), -NHC(=O)-NH- (urée), ou -C(=O)- (carbonyle), et/ou peut éventuellement être substitué.

De préférence, l'ester hydroxylé de l'acide acrylique ou méthacrylique a l'une des formules suivantes :

(X-1) CH₂=CR^{V}-C(=O)-O-R^{AC1}-OH

R^{V} peut être comme décrit ci-dessus et R^{AC1} peut représenter un radical hydrocarboné divalent linéaire ou ramifié, aliphatique ou cyclique, saturé ou insaturé. R^{AC1} peut comprendre de 2 à 22 atomes de carbone, de préférence de 2 à 18, préférentiellement de 2 à 14, et encore plus avantageusement de 2 à 6 atomes de carbone.

(X-2) CH₂=CR^{V}-C(=O)-O-R^{AC1}-O-[C(=O)-(CH₂)ᵣ-O]ₛ-H

R^{V} et R^{AC1} peuvent être comme décrits ci-dessus.
r peut être un nombre entier allant de 1 à 10, de préférence de 1 à 5, et préférentiellement r peut être égal à 5 .
s peut être un nombre entier allant de 1 à 10, s étant de préférence égal à 2.

   (X-3) CH₂=CR^{V}-C(=O)-O-[R^{AC2}-O]ₚ-H
R^{V} peut être comme décrit ci-dessus.
R^{AC2} peut représenter un radical hydrocarboné divalent linéaire ou ramifié comprenant de 2 à 4 atomes de carbone.
p peut être un nombre entier allant de 2 à 120, de préférence de 1 à 10, et de préférence p peut être égal à 2 ou 3.

Parmi les esters hydroxylés des acides acrylique et méthacrylique de formule (X-1), on peut citer par exemple le 2-hydroxyéthyl acrylate (HEA), le 2-hydroxypropyl acrylate (HPA), 2-hydroxybutyl acrylate (2-HBA) et le 4-hydroxybutyl acrylate (4-HBA) commercialisés par les sociétés SARTOMER, COGNIS ou BASF, le 2-hydroxyéthyl méthacrylate (HEMA) et le 2-hydroxypropyl méthacrylate (HPMA) commercialisé par la société EVONIK, le 2-hydroxybutyl méthacrylate (2-HBMA) et le 4-hydroxybutyl méthacrylate (4-HBMA) commercialisé par la société SIGMA-ALDRICH.

Parmi les esters hydroxylés des acides acrylique et méthacrylique de formule (X-2) ci-dessus, on peut citer par exemple le polycaprolactone acrylate SR 495B (CAPA) commercialisé par la société SARTOMER ou le hydroxyéthylcaprolactone acrylate (HECLA) commercialisé par la société BASF.

Parmi les dérivés éthoxylés et/ou propoxylés des acides acrylique et méthacrylique de formule (X-3) susmentionnée,, on peut par exemple citer le BLEMMER ^{®} AP-150, le BLEMMER ^{®} AP-200, le BLEMMER ^{®} AP-400, le BLEMMER ^{®} AP-550, le BLEMMER ^{®} AP-800, le BLEMMER ^{®} AP-1000, le BLEMMER ^{®} AE-90, le BLEMMER ^{®} AE-150, le BLEMMER ^{®} AE-200, le BLEMMER ^{®} AE-350, le BLEMMER ^{®} AE-400, commercialisés par NIPPON OlL & FATS CORPORATION, ou encore le SR 604 commercialisé par la société SARTOMER.

De préférence, l'ester hydroxylé de l'acide acrylique ou méthacrylique peut être de formule (X-1), et plus préférentiellement peut être l'une des formules (X-1-1), (X-1-2), (X-1-3) ou (X-1-4) suivantes :

(X-1-1) CH₂=CH-C(=O)-O-CH₂-CH₂-OH

(X-1-2) CH₂=C(CH₃)-C(=O)-O-CH₂-CH₂-OH

(X-1-3) CH₂=CH-C(=O)-O-CH₂-CH(CH₃)-OH

(X-1-4) CH₂=C(CH₃)-C(=O)-O-CH₂-CH(CH₃)-OH

la formule (X-1-1) étant du 2-hydroxyéthylacrylate, la formule (X-1-2) étant du 2-hydroxyéthylméthacrylate, la formule (X-1-3) étant du 2-hydroxypropylacrylate, et la formule (X-1-4) étant du 2-hydroxypropylméthacrylate.

Dans le cadre de l'invention, on entend par « *amide hydroxylée de l'acide acrylique ou méthacrylique* », un amide de l'acide acrylique ou de l'acide méthacrylique dont le radical amide est substitué par au moins un groupe hydroxyle. On peut par exemple représenter un amide hydroxylé de l'acide acrylique ou méthacrylique par la formule suivante :

CH₂=CR^{V}-C(=O)-N(R'^{N})-R^{N}

R^{V} et R'^{N} peuvent être tels que décrits ci-dessus.
R^{N} peut représenter un radical organique substitué par au moins un groupe hydroxyle.

Selon certains modes de réalisation, l'amide hydroxylé de l'acide acrylique a la formule (XI) suivante :

(XI) CH₂=CR^{V}-C(=O)-N(R'^{N})-R^{AM}-OH

R^{V} et R'^{N} peuvent être tels que décrits ci-dessus.
R^{AM} peut représenter un radical hydrocarboné divalent linéaire ou ramifié, aliphatique ou cyclique, saturé ou insaturé, comprenant de préférence de 1 à 240 atomes de carbone, et/ou étant éventuellement interrompu par un ou plusieurs hétéroatomes (tel que par exemple N, O, S, et en particulier O), et/ou étant éventuellement interrompu par un ou plusieurs groupes divalents -N(R"^{N})- avec R"^{N} étant tel que défini ci-dessus, et/ou étant éventuellement substitué.

Selon certains modes de réalisations, l'amide hydroxylé de l'acide acrylique ou méthacrylique a l'une des formules suivantes :

(XI-1) CH₂=CR^{V}-C(=O)-N(R'^{N})-R^{AM1}-OH

R^{V} et R'^{N} peuvent être tels que décrits ci-dessus.
R^{AM1} peut représenter un radical hydrocarboné divalent linéaire ou ramifié, aliphatique ou cyclique, saturé ou insaturé, comprenant de 1 à 22 atomes de carbone, de préférence de 1 à 18, préférentiellement de 1 à 14, et encore plus avantageusement de 1 à 6 atomes de carbone.

   (XI-2) CH₂=CR^{V}-(=O)-N(R^{N})-R^{AM1}-O-[C(=O)-(CH₂)ᵣ-O]ₛ-H
R'^{N}, R^{V}, R^{AM1}, r, et s peuvent être tels que définis ci-dessus.

   (XI-3) CH₂=CR^{V}-C(=O)-N(R^{N})-[R^{AM3}-O]ₚ-H
R^{V}, R'^{N} et p peuvent être tels que définis ci-dessus.
R^{AM3} peut représenter un radical alkylène divalent linéaire ou ramifié comprenant de 2 à 4 atomes de carbone.

De préférence, l'amide hydroxylé de l'acide acrylique ou méthacrylique peut être de formule (XI-1), et plus préférentiellement peut être l'une des formules (XI-1-1), (XI-1-2), (XI-1-3) ou (XI-1-4) suivantes :

(XI-1-1) CH₂=CH-C(=O)-NH-CH₂-CH₂-OH

(XI-1-2) CH₂=C(CH₃)-C(=O)-NH-CH₂-CH₂-OH

(XI-1-3) CH₂=CH-C(=O)-NH-CH₂-CH(CH₃)-OH

(XI-1-4) CH₂=C(Me)-C(=O)-NH-CH₂-CH(CH₃)-OH

la formule (XI-1-1) étant du 2-hydroxyéthyl acrylamide, la formule (XI-1-2) étant du 2-hydroxyéthyl méthacrylamide, la formule (XI-1-3) étant du 2-hydroxypropyl acrylamide, et la formule (XI-1-4) étant du 2-hydroxypropyl méthacrylamide.

Alternativement, l'ester hydroxylé ou l'amide hydroxylé peuvent comprendre plus qu'une fonction acrylique, par exemple deux fonctions acryliques (tel que le triméthylolpropane diacrylate), ou trois fonctions acryliques (tel que le pentaerythritol triacrylate commercialisé par la société SARTOMER sous le nom SR 444D), ou quatre fonctions acryliques, ou cinq fonctions acryliques (tel que le di-pentaerythritol pentacrylate commercialisé par la société SARTOMER sous le nom SR 399).

Alternativement, l'ester hydroxylé ou l'amide hydroxylé peuvent comprendre plus qu'une fonction hydroxyle, par exemple deux fonctions hydroxyles et deux fonctions acryliques (tel que le pentaerythritol diacrylate disponible chez BOC Sciences), ou deux fonctions hydroxyle et une fonction acrylique (tel que le glycerol monoacrylate disponible chez BOC Sciences).

De préférence, le polyuréthane comprenant au moins un groupement acrylique et au moins un groupement isocyanate peut être préparé par un procédé comprenant les étapes suivantes :
E1) la préparation d'un polyuréthane comprenant au moins deux fonctions terminales NCO (de préférence aux extrémités de la chaîne principale) par une réaction de polyaddition :
   i) d'au moins un polyisocyanate de préférence choisi parmi les diisocyanates, les triisocyanates, les oligomères de diisocyanates et leurs mélanges ;
   ii) avec au moins un polyol, de préférence choisi parmi les polyéther polyols, les polyester polyols, les polyène polyols, les polycarbonate polyols, les poly(éther-carbonate) polyols, les polymères à terminaisons -OH, et leurs mélanges ;
   dans des quantités telles que le rapport molaire NCO/OH, noté (r1), est strictement supérieur à 1, de préférence va de 1,60 à 1,90, et préférentiellement va de 1,65 à 1,85 ;
   et
E2) la réaction du produit formé à l'issue de l'étape E1) avec au moins un ester hydroxylé de l'acide acrylique ou méthacrylique tel que défini ci-dessus (de préférence de formule (X-1-1) ou (X-1-2)) ou au moins un amide hydroxylé de l'acide acrylique ou méthacrylique tel que défini ci-dessus (de préférence de formule (XI-1-1) ou (XI-1-2)), dans des quantités telles que le rapport molaire OH/NCO, noté (r2), inférieur à 1,00, est défini de manière à atteindre le nombre de fonctions isocyanate et de fonctions acryliques souhaitées par mole de polymère.

Préférentiellement, l'étape E2) est réalisée avec au moins un ester hydroxylé de l'acide acrylique tel que défini ci-dessus, de préférence de formule (X-1-1) ou (X-1-2).

Dans le cadre de l'invention, (r1) est le rapport molaire NCO/OH correspondant au rapport molaire du nombre de groupes isocyanates (NCO) sur le nombre de groupes hydroxyles (OH) portés par l'ensemble des polyisocyanates et polyols présents dans le milieu réactionnel de l'étape E1).

Lorsque le polyuréthane à terminaisons NCO est obtenu lors de l'étape E1) à partir d'un mélange de polyisocyanates ou de plusieurs polyisocyanates ajoutés successivement, le calcul du rapport (r1) tient compte d'une part des groupes NCO portés par l'ensemble des polyisocyanates présents dans le milieu réactionnel de l'étape E1), et d'autre part des groupes OH portés par les polyols présents dans le milieu réactionnel de l'étape E1).

Dans le cadre de l'invention, (r2) est le rapport molaire OH/NCO correspondant au rapport molaire du nombre de groupes hydroxyles (OH) sur le nombre de groupes isocyanates (NCO) portés respectivement par l'ensemble des alcools, et des isocyanates (s'agissant notamment du polyuréthane à terminaisons NCO et éventuellement les polyisocyanates non réagis à l'issue de l'étape E1)) présents dans le milieu réactionnel de l'étape E2).

Les polyols utilisés dans l'étape E1) l'invention peuvent être choisis parmi ceux dont la masse molaire moyenne en nombre (Mn) va de 400 à 12 000 g/mol, de préférence de 1 000 à 8 000 g/mol, et plus préférentiellement de 1 000 à 4 000 g/mol.

De préférence, leur fonctionnalité hydroxyle peut aller de 2 à 3, et préférentiellement 2.

Les polyols utilisables selon l'invention peuvent présenter un indice hydroxyle (IOH) (moyen) allant de 9 à 420 milligrammes de KOH par gramme de polyol (mg KOH/g), de préférence de 14 à 168 mg KOH/g, et préférentiellement de 28 à 168 mg KOH/g.

Selon certains modes de réalisation, l'indice d'hydroxyle de polyols présentant une fonctionnalité hydroxyle de 2 peut aller de 9 à 280 mg KOH/g, préférentiellement de 14 à 112 mg KOH/g et plus préférentiellement de 28 à 112 mg KOH/g.

Selon certains modes de réalisation, l'indice d'hydroxyle de polyols présentant une fonctionnalité hydroxyle de 3 va de 14 à 420 mg KOH/g, préférentiellement de 21 à 168 mg KOH/g et de préférence de 15 à 56 mg KOH/g et plus préférentiellement de 42 à 168 mg KOH/g.

Les polyols utilisables peuvent être choisis parmi les polyéther polyols, les polyester polyols, les polycaprolactone polyols, les polyène polyols insaturés ou hydrogénés, les polycarbonate polyols, les poly(éther-carbonate) polyols, les polymères à terminaisons -OH, et leurs mélanges.

Les polyols utilisables peuvent être de préférence choisis parmi les polyéther polyols, les polyester polyols, et leurs mélanges.

Plus préférentiellement, les polyéther polyols utilisables selon l'invention sont choisis parmi les polyoxyalkylène diols ou polyoxyalkylène triols, dont la partie alkylène, linéaire ou ramifiée, comprend de 1 à 4 atomes de carbone, plus préférentiellement de 2 à 3 atomes de carbone.

Plus préférentiellement encore, les polyester polyols utilisables selon l'invention sont de préférence choisis parmi les polyester diols et triols aliphatiques, aromatiques, arylaliphatiques et leurs mélanges.

A titre d'exemple de polyoxyalkylène polyols utilisables selon l'invention, on peut citer les polyoxypropylène diols ou triols (aussi désignés par polypropylène glycol (PPG) diols ou triols) ayant une masse moléculaire moyenne en nombre (Mn) allant de 400 à 12 000 g/mol et leurs mélanges.

Les polyéther polyols suscités peuvent être préparés de manière conventionnelle, et sont largement disponibles dans le commerce. Ils peuvent être obtenus par polymérisation de l'oxyde d'alkylène correspondant en présence d'un catalyseur basique (par exemple de la potasse) ou d'un catalyseur à base d'un double complexe métal-cyanure.

A titre d'exemple de polyéther diol, on peut citer le polyoxypropylène diol commercialisé sous la dénomination « ACCLAIM^{®} » par la société BAYER, tels que « ACCLAIM^{®} 12200 » de masse molaire moyenne en nombre voisine de 11335 g/mol et dont l'indice hydroxyle va de 9 à 11 mg KOH/g, « ACCLAIM^{®} 8200 » de masse molaire moyenne en nombre voisine de 8057 g/mol et dont l'indice hydroxyle va de 13 à 15 mg KOH/g, et « ACCLAIM^{®} 4200 » de masse molaire moyenne en nombre voisine de 4020 g/mol, et dont l'indice hydroxyle va de 26,5 à 29,5 mg KOH/g obtenus, de façon connue, par polymérisation de l'oxyde d'alkylène correspondant en présence d'un catalyseur à base d'un double complexe métal-cyanure.

A titre d'exemple de polyéther triol, on peut citer le polyoxypropylène triol commercialisé sous la dénomination « VORANOL^{®} CP3355 » par la société DOW, dont l'indice d'hydroxyle est de 48 mg KOH/g.

Selon l'invention, les polyester polyols peuvent avoir une masse moléculaire moyenne en nombre (Mn) allant de 400 à 12 000 g/mol, de préférence de 1 000 à 8 000 g/mol, et plus préférentiellement de 1 000 à 4 000 g/mol.

A titre d'exemple de polyester diols ou triols, on peut citer les polyesters polyols d'origine naturelle dérivés de l'huile de ricin ainsi que les polyesters polyols résultant de la polycondensation :
- d'un ou plusieurs polyols aliphatiques (linéaires, ramifiés ou cycliques) ou aromatiques tels que par exemple le monoéthylène glycol, le diéthylène glycol, le 1,2-propanediol, le 1,3-propanediol, le 1,4-butanediol, le butènediol, le 1,6-hexanediol, le cyclohexane diméthanol, le tricyclodécane diméthanol, le néopentyl glycol, le cyclohexane diméthanol, le glycérol, le triméthylolpropane, le 1,2,6-hexanetriol, le sucrose, le glucose, le sorbitol, le pentaérythritol, le mannitol, la N-méthyldiéthanolamine, la triéthanolamine, un alcool gras dimère, un alcool gras trimère et leurs mélanges, avec
- un ou plusieurs acide polycarboxyliques ou son dérivé ester ou anhydride tel que l'acide 1,6-hexanedioïque (acide adipique), l'acide dodécanedioïque, l'acide azélaïque, l'acide sébacique, l'acide adipique, l'acide 1,18-octadécanedioïque, l'acide phtalique, l'acide isophtalique, l'acide téréphtalique, l'acide succinique, un acide gras dimère, un acide gras trimère et les mélanges de ces acides, un anhydride insaturé tel que par exemple l'anhydride maléique ou phtalique, ou une lactone telle que par exemple la caprolactone.

Les polyester polyols suscités peuvent être préparés de manière conventionnelle, et sont pour la plupart disponibles commercialement.

A titre d'exemple de polyesters polyols, on peut par exemple citer les produits suivants de fonctionnalité hydroxyle égale à 2 :
- les estolides polyols résultant de la polycondensation d'un ou plusieurs hydroxyacides, tel que l'acide ricinoléïque, sur un diol (on peut par exemple citer le « POLYCIN^{®} D-2000 » de masse moléculaire moyenne en nombre (Mn) d'environ 2 000 g/mol, le « POLYCIN^{®} D-3000 » de masse moléculaire moyenne en nombre (Mn) d'environ 3 000 g/mol et « POLYCIN^{®} D-4000 » de masse moléculaire moyenne en nombre (Mn) d'environ 4 000 g/mol disponibles chez VERTELLUS).
- le « TONE^{®} 0240 » (commercialisé par UNION CARBIDE) qui est une polycaprolactone de masse moléculaire moyenne en nombre (Mn) d'environ 2000 g/mol, et un point de fusion de 50°C environ,
- le « DYNACOLL^{®} 7381 » (comercialisé par EVONIK) de masse moléculaire moyenne en nombre (Mn) d'environ 3 500 g/mol, et ayant un point de fusion de 65°C environ,
- le « DYNACOLL^{®} 7360 » (commercialisé par EVONIK) qui résulte de la condensation de l'acide adipique avec l'hexanediol, et a une masse moléculaire moyenne en nombre (Mn) d'environ 3 500 g/mol, et un point de fusion de 55°C environ,
- le « DYNACOLL^{®} 7330 » (commercialisé par EVONIK) de masse moléculaire moyenne en nombre (Mn) d'environ 3 500 g/mol, et ayant un point de fusion de 85°C environ,
- le « DYNACOLL^{®} 7363 » (commercialisé par EVONIK) qui résulte également de la condensation de l'acide adipique avec l'hexanediol, et a une masse moléculaire moyenne en nombre (Mn) d'environ 5500 g/mol, et un point de fusion de 57°C environ,
- le « DYNACOLL^{®} 7250 » (commercialisé par EVONIK) : polyester polyol ayant une viscosité de 180 Pa.s à 23°C, une masse moléculaire moyenne en nombre (Mn) égale à 5 500 g/mol, et une Tg égale à -50°C,
- le « KURARAY^{®} P-6010 » (commercialisé par KURARAY) : polyester polyol ayant une viscosité de 68 Pa.s à 23°C, une masse moléculaire moyenne en nombre (Mn) égale à 6 000 g/mol, et une Tg égale à -64°C,
- le « KURARAY^{®} P-10010 » (commercialisé par KURARAY) : polyester polyol ayant une viscosité de 687 Pa.s à 23°C, et une masse moléculaire moyenne en nombre (Mn) égale à 10 000 g/mol,

Selon l'invention, les polyène polyols, ainsi que leurs dérivés correspondants hydrogénés ou époxydés, peuvent avoir une masse moléculaire moyenne en nombre (Mn) allant de 400 à 12 000 g/mol, de préférence de 1 000 à 8 000 g/mol, et plus préférentiellement de 1 000 à 4 000 g/mol.

De préférence, les polyène polyols utilisables selon l'invention sont choisis parmi les homopolymères et copolymères de butadiène et/ou d'isoprène comportant des groupes hydroxyles terminaux, éventuellement hydrogénés ou époxydés.

Dans le cadre de l'invention, on entend par « *groupes hydroxyles terminaux* » d'un polyène polyol, les groupes hydroxyles situés aux extrémités de la chaîne principale du polyène polyol.

Les dérivés hydrogénés mentionnés ci-dessus peuvent être obtenus par hydrogénation totale ou partielle des doubles liaisons d'un polydiène comportant des groupes hydroxyles terminaux, et sont donc saturés ou insaturés.

Les dérivés époxydés mentionnés ci-dessus peuvent être obtenus par époxydation chémiosélective des doubles liaisons de la chaîne principale d'un polyène comportant des groupes hydroxyles terminaux, et comportent donc au moins un groupe époxy dans sa chaîne principale.

A titre d'exemples de polyène polyols, on peut citer les homopolymères et copolymères de butadiène et/ou d'isoprène, saturés ou insaturés, comprenant des groupes hydroxyles terminaux, éventuellement époxydés, tels que par exemple ceux commercialisés sous la dénomination « POLY BD^{®} ou KRASOL^{®} » par la société CRAY VALLEY.

A titre d'exemples de polyène polyols, on peut citer :
- les homopolymères diols de butadiène, saturés ou insaturés, comprenant des groupes hydroxyles terminaux tels que ceux commercialisés sous la dénomination « POLY BD^{®} R45HT » (Mn = 2800 g/mol) ou KRASOL^{®} » (Mn = 2 400 à 3 100 g/mol) commercialisés par la société CRAY VALLEY.
- les homopolymères diols de l'isoprène, saturés ou insaturés, comprenant des groupes hydroxyles terminaux, tels que par exemple ceux commercialisés sous la dénomination « POLY IP^{™} » (insaturé, Mn = 2000 g/mol) ou « EPOL^{™} » (saturé, Mn = 2 600 g/mol) par la société IDEMITSU KOSAN.

Selon l'invention, les polycarbonate polyols peuvent avoir une masse moléculaire moyenne (Mn) en nombre allant de 400 à 12 000 g/mol, de préférence de 1 000 à 8 000 g/mol, et plus préférentiellement de 1 000 à 4 000 g/mol.

A titre d'exemple de polycarbonate diols, on peut citer :
- - le « CONVERGE^{®} POLYOL 212-20 » commercialisés par la société NOVOMER de masse moléculaire en nombre (Mn) égale à 2 000 g/mol dont l'indice hydroxyle est respectivement de 56 mg KOH/g,
- - les « POLYOL C-2090 et C-3090 » commercialisés par la société KURARAY de masse moléculaire en nombre (Mn) respectivement de 2000 et 3000 g/mol et avec un indice hydroxyle de 56 et 37 mg KOH/g.

L'indice hydroxyle représente ici le nombre de fonctions hydroxyles par gramme de polyol et est exprimé dans le texte de la présente demande sous la forme du nombre équivalent de milligrammes de potasse (KOH) utilisés dans le dosage des fonctions hydroxyles.

Selon l'invention, les polymères à terminaisons -OH peuvent être obtenus par réaction de polyaddition entre un ou plusieurs polyols, et un ou plusieurs polyisocyanates, dans des quantités de polyisocyanates et de polyols conduisant à un rapport molaire NCO/OH strictement supérieur à 1. La réaction peut être réalisée en présence d'un catalyseur. Les polyols et polyisocyanates utilisables peuvent être ceux typiquement utilisés pour la préparation de polyuréthanes à terminaisons -NCO, et de préférence ceux décrits dans la présente demande.

De préférence, les polyols sont des polyéther polyols.

Selon un mode de réalisation préféré, l'étape E1) est mise en oeuvre en présence d'un diol ayant une masse moléculaire moyenne en nombre (Mn) supérieure ou égale à 400 g/mol, ou en présence d'un mélange de polyols comprenant un ou plusieurs diol(s) dont la masse moléculaire moyenne en nombre (Mn) est supérieure ou égale à 400 g/mol. De façon encore plus préférée, tous les diols utilisés ont nécessairement une masse moléculaire moyenne en nombre (Mn) supérieure ou égale à 400 g/mol. Selon un mode de réalisation préféré, l'étape E1) est mise en oeuvre :
- avec un unique diol de masse moléculaire moyenne en nombre (Mn) supérieure ou égale à 400 g/mol ; ou
- avec un mélange d'un diol de masse moléculaire moyenne en nombre (Mn) supérieure ou égale à 400 g/mol, et d'un triol ayant avantageusement une masse moléculaire moyenne en nombre (Mn) supérieure ou égale à 400 g/mol.

Les polyisocyanates utilisables selon l'invention dans l'étape E1) peuvent être ajoutés séquentiellement ou mis à réagir sous la forme de mélange.

Selon un mode de réalisation, les polyisocyanates utilisables sont des diisocyanates, de préférence choisi dans le groupe constitué de l'isophorone diisocyanate (IPDI), de l'hexaméthylène diisocyanate (HDI), de l'heptane diisocyanate, de l'octane diisocyanate, du nonane diisocyanate, du décane diisocyanate, de l'undécane diisocyanate, du dodécane diisocyanate, du 4,4'-méthylènebis(cyclohexylisocyanate) (4,4'-HMDI), du norbornane diisocyanate, du norbornène diisocyanate, du 1,4-cyclohexane diisocyanate (CHDI), du méthylcyclohexane diisocyanate, de l'éthylcyclohexane diisocyanate, du propylcyclohexane diisocyanate, du méthyldiéthylcyclohexane diisocyanate, du cyclohexane diméthylène diisocyanate, du 1,5-diisocyanato-2-méthylpentane (MPDI), du 1,6-diisocyanato-2,4,4-triméthylhexane, du 1,6-diisocyanato-2,2,4-triméthylhexane (TMDI), du 4-isocyanatométhyl-1,8-octane diisocyanate (TIN), du (2,5)-bis(isocyanatométhyl)bicyclo[2.2.1]heptane (2,5-NBDI), du (2,6)-bis(isocyanatométhyl)bicyclo[2.2.1]heptane (2,6-NBDI), du 1,3-bis(isocyanatomethyl)cyclohexane (1,3-H6-XDI), du 1,4-bis(isocyanatomethyl)-cyclohexane (1,4-H6-XDI), du xylylène-diisocyanate (XDI) (en particulier le m-xylylène diisocyanate (m-XDI)), du toluène diisocyanate (en particulier le 2,4-toluène diisocyanate (2,4-TDI) et/ou le 2,6-toluène diisocyanate (2,6-TDI)), du diphénylméthane diisocyanate (en particulier le 4,4'-diphénylméthane diisocyanate (4,4'-MDI) et/ou le 2,4'-diphénylméthane diisocyanate (2,4'-MDI)), du tétraméthylxylylène diisocyanate (TMXDI) (en particulier le tétraméthyl (méta)xylylène diisocyanate), d'un allophanate de HDI ayant par exemple la formule (Y) suivante : 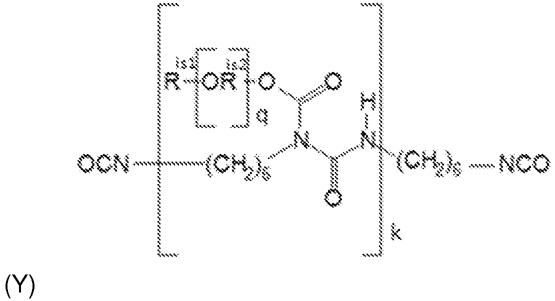
k peut être un nombre entier allant de 1 à 2.
q peut être un nombre entier allant de 0 à 9, et de préférence 2 à 5.
R^{is1} peut représenter une chaine hydrocarbonée, saturée ou insaturée, cyclique ou acyclique, linéaire ou ramifiée, comprenant de 1 à 20 atomes de carbone, de préférence de 1 à 12 atomes de carbones, et encore de préférence de 6 à 14 atomes de carbone.
R^{is2} peut représenter un groupe divalent alkylène, linéaire ou ramifié, ayant de 2 à 4 atomes de carbones, et de préférence un groupe divalent propylène.

De préférence, l'allophanate de formule (Y) est tel que k, q, R^{is1} et R^{is2} sont choisis tel que le dérivé d'allophanate de HDI ci-dessus comprend une teneur en groupe isocyanate NCO allant de 12 à 14 % en poids par rapport au poids dudit dérivé.

Les polyisocyanates utilisables pour préparer le polyuréthane utilisé selon l'invention sont largement disponibles dans le commerce. A titre d'exemple, on peut citer le « SCURANATE^{®} TX » commercialisé par la société VENCOREX, correspondant à un 2,4-TDI de pureté de l'ordre de 95 %, le « SCURANATE^{®} T100 » commercialisé par la société VENCOREX, correspondant à un 2,4-TDI de pureté supérieure à 99% en poids, le « DESMODUR^{®} I » commercialisé par la société COVESTRO, correspondant à un IPDI, le « TAKENATE TM 500 » commercialisé par MITSUI CHEMICALS correspondant à un m-XDI, , le « TAKENATE TM 600 » commercialisé par MITSUI CHEMICALS correspondant à un m-H6XDI, le « VESTANAT^{®} H12MDI » commercialisé par EVONIK correspondant à un H12MDI, les « DESMODUR N3300 » et « DESMODUR N3600 » commercialisés par la société COVESTRO, correspondants à des oligomères de HDI, ou encore ceux de la série des « TOLONATE^{®} » commercialisés par la société VENCOREX, tel que le « TOLONATE^{®} X FLO 100 » correspondant à un dérivé d'allophanate de HDI de formule (Y).

Selon un mode de réalisation préféré, le(s) polyisocyanate(s) de l'étape E1) est(sont) choisi(s) dans le groupe constitué du toluène diisocyanate (en particulier l'isomère 2,4 TDI, l'isomère 2,6-TDI ou leurs mélanges), du méta-xylylène diisocyanate (m-XDI), de l'isophorone diisocyanate, des allophanates de HDI, des oligomères de HDI et de leurs mélanges.

La réaction entre lesdits polyisocyanates et lesdits polyols peut s'effectuer à une température de réaction T1 inférieure à 95°C et de préférence allant de 65°C à 80°C.

La réaction de polyaddition de l'étape E1) peut être mise en oeuvre en présence ou non d'au moins un catalyseur de réaction.

Le catalyseur de réaction utilisable au cours de la réaction de polyaddition de l'étape E1) peut être tout catalyseur connu de l'homme du métier pour catalyser la formation de polyuréthane par réaction d'au moins un polyisocyanate avec au moins un polyol. Une quantité allant jusqu'à 0,3% en poids de catalyseurs par rapport au poids du milieu réactionnel de l'étape E1) peut être utilisée. En particulier, on préfère utiliser de 0,02% à 0,2% en poids de catalyseurs par rapport au poids total du milieu réactionnel de l'étape E1).

Le polyuréthane obtenu à l'issue de l'étape E1) susmentionnée peut avoir la formule (XII) suivante :

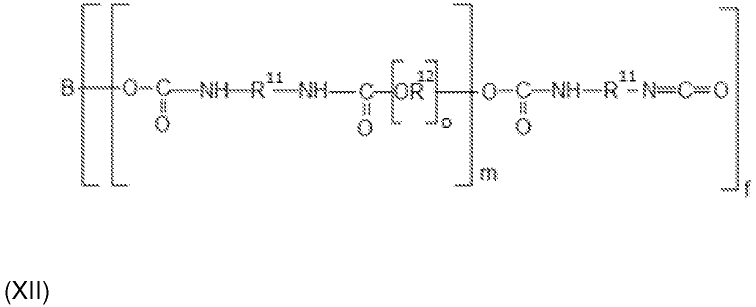

B peut représenter l'une des deux formules ci-dessus : 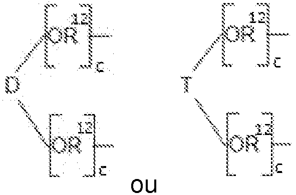
D et T peuvent représenter un radical hydrocarboné comprenant de 2 à 66 atomes de carbone, linéaire ou ramifié, aliphatique ou cyclique, saturé ou insaturé, comprenant éventuellement un ou plusieurs hétéroatomes.
R¹¹ peut représenter un groupe divalent issu des polyisocyanates.
R¹² peut représenter un groupe divalent issu des polyols.
c peut être un nombre entier non nul tel que la masse molaire moyenne en nombre (Mn) des blocs polyols de formule -[OR¹²]_{c}- va de 400 à 12 000 g/mol, de préférence de 1 000 à 8 000 g/mol, et plus préférentiellement de 1 000 à 4 000 g/mol.
f peut représenter la fonctionnalité moyenne du polyuréthane -NCO terminé laquelle est un nombre entier ou non entier pouvant allant de 2,0 à 2,2 .
f, o et m sont des nombres entiers tels que le pourcentage NCO du polyuréthane va de 0,4% à 30% et préférentiellement de 0,6% à 20 % par rapport au poids total dudit polyuréthane.

En particulier, R¹¹ peut représenter un groupe divalent choisi parmi l'un des groupes divalents aliphatiques ou aromatiques suivants :
- le groupe divalent dérivé de l'isophorone diisocyanate (IPDI) : 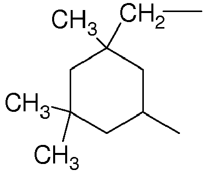
- le groupe divalent dérivé du 2,4-toluène diisocyanate (2,4-TDI) : 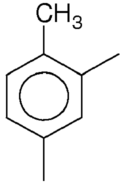
- le groupe divalent dérivé du m-xylylène diisocyanate (m-XDI) : 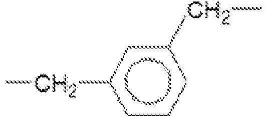
- le groupe divalent dérivé des 4,4'-diisocyanate de diphényl méthane (4,4'-MDI) et 2,4'-diisocyanate de diphénylméthane (2,4'-MDI) : 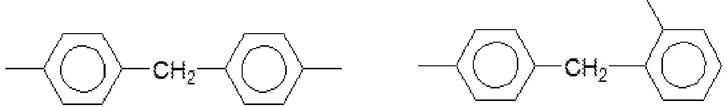
- le groupe divalent dérivé d'un allophanate d'hexaméthylène diisocyanate HDI de formule suivante : 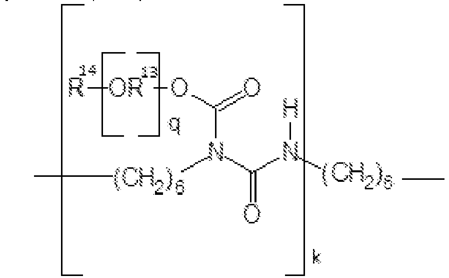
dans laquelle k peut être un nombre entier allant de 1 à 2 et q peut être un nombre entier allant de 2 à 5.

Dans cette formule, R¹³ peut représenter un groupe divalent propylène et R¹⁴ peut représenter une chaine hydrocarbonée, saturée ou insaturée, cyclique ou aliphatique, linéaire ou ramifiée, comprenant de 6 à 14 atomes de carbone.
k, q, R¹³ et R¹⁴ peuvent être choisis tel que le dérivé d'allophanate de HDI correspondant de formule (IX) comprend une teneur en groupe isocyanate NCO allant de 12% à 14% en poids.

Le polyuréthane obtenu à l'étape E1) a de préférence une viscosité allant de 5000 à 200 000 mPa.s (millipascal seconde) à 23°C, et plus préférentiellement une viscosité inférieure à 100 000 mPa.s.

Selon certains modes de réalisation préférés, le polyuréthane comprenant au moins deux fonctions terminales NCO est obtenu par réaction de polyaddition E1):
i) d'au moins un diisocyanate choisi dans le groupe constitué du toluène diisocyanate, du méta-xylylène, de l'isophorone diisocyanate, des allophanates de HDI, et de leurs mélanges ;
ii) avec au moins un polyéther diol ayant une masse moléculaire moyenne en nombre (Mn) supérieure ou égale à 400 g/mol, ou avec un mélange de polyéther diol ayant une masse moléculaire moyenne en nombre (Mn) supérieure ou égale à 400 g/mol avec un polyéther triol ayant avantageusement une masse moléculaire moyenne en nombre (Mn) supérieure ou égale à 400 g/mol.

La réaction de l'étape E2) peut être mise en oeuvre à une température de réaction T2 inférieure 95°C et de préférence allant de 65°C à 80°C, de préférence dans des conditions anhydres.

Les esters hydroxylés des acides acrylique ou méthacrylique de formule (X) susmentionnée, de préférence de formules (X-1) ou (X-2) ou (X-3), peuvent être mis en oeuvre soit purs, soit sous la forme d'un mélange de différents esters hydroxylés de l'acide acrylique ou méthacrylique ayant un indice hydroxyle moyen dudit mélange allant de 56 à 483 mg KOH/g dudit mélange.

Les amides hydroxylés des acides acrylique ou méthacrylique de formule (XI) susmentionnée, de préférence de formules (XI-1) ou (XI-2) ou (XI-3), peuvent être mis en oeuvre soit purs, soit sous la forme d'un mélange de différentes amides hydroxylées de l'acide acrylique ou méthacrylique ayant un indice hydroxyle moyen dudit mélange allant de 56 à 487 mg KOH/g dudit mélange.

L'étape E2) est de préférence réalisée avec au moins un ester hydroxylé de l'acide acrylique ou méthacrylique de formule (X) susmentionnée, de préférence de formules (X-1) ou (X-2) ou (X-3) susmentionnées, et en particulier de formule (X-1-1), (X-1-2), (X-1-3) ou (X-1-4) susmentionnées, avantageusement de formule (X-1-1) ou (X-1-2) susmentionnées.

Le catalyseur de réaction utilisable pour les étapes E1) et E2) peut être tout catalyseur connu par l'homme du métier pour catalyser la formation de polyuréthane par réaction d'au moins un diisocyanate, d'au moins un polyol et d'au moins un hydroxyalkyl acrylate ou méthacrylate ou une hydroxyalkyl acrylamide ou méthacrylamide.

De préférence, on utilise un ou plusieurs catalyseurs choisis parmi les catalyseurs ne présentant pas ou peu de risque de toxicité. En, particulier, le ou les catalyseurs de réaction sont choisis dans le groupe constitué :
- -des dérivés organométalliques du bismuth, tel que le néodécanoate de bismuth vendu sous la dénomination « BORCHIKAT^{®}315 » par la société OM Group, le carboxylate de bismuth vendu sous la dénomination « K-KAT^{®} XC B221 » par la société KING INDUSTRIES,
- des dérivés organométalliques de l'étain autres que le dibutyl dilaurate d'étain, tel que par exemple le dioctyl dilaurate d'étain (DOTL) tel que vendu sous la dénomination « TIB^{®} KAT 217 » par la société « TIB Chemical »,
- des dérivés organométalliques du zinc, tel que le carboxylate de zinc vendu sous la dénomination « BORCHI KAT^{®}22 » par la société OM Group,
- des dérivés organométalliques du titane, tel que le tétrabutylate de titane Ti(OCH₂CH₂CH₂CH₃)₄, l'éthylacétoacétate de titane vendu sous la dénomination « TYZOR^{®} PITA » par la société DUPONT,
- des dérivés organométalliques du zirconium, tel que le chélate de zirconium vendu sous la dénomination « K-KAT^{®} A209 », l'acétylacétonate de zirconium (Zr(acac)₄), et le tétraéthanolate de zirconium Zr(OCH₂CH₃)₄, et
- de leurs mélanges.

Une quantité allant jusqu'à 0,3% en poids de catalyseurs par rapport au poids total du milieu réactionnel de l'étape E2) peut être utilisée. En particulier, on préfère utiliser de 0,02% à 0,3% en poids de catalyseurs par rapport au poids total du milieu réactionnel de l'étape E2).

Selon un mode de réalisation préféré, le polyuréthane (a) susmentionné est obtenu par un procédé comprenant les étapes suivantes :
E1) la préparation d'un polyuréthane comprenant au moins deux fonctions terminales NCO par réaction de polyaddition :
   i) d'au moins un diisocyanate choisi dans le groupe constitué du toluène diisocyanate, du méta-xylylène, de l'isophorone diisocyanate, des allophanates de HDI, et de leurs mélanges ;
   ii) avec au moins un polyéther diol ayant une masse moléculaire moyenne en nombre (Mn) supérieure ou égale à 400 g/mol, ou avec un mélange de polyéther diol ayant une masse moléculaire moyenne en nombre (Mn) supérieure ou égale à 400 g/mol avec un polyéther triol ayant avantageusement une masse moléculaire moyenne en nombre (Mn) supérieure ou égale à 400 g/mol ;
E2) la réaction du produit formé à l'issue de l'étape E1) avec au moins un ester hydroxylé de l'acide acrylique ou méthacrylique de formule (X-1-1), dans des quantités telles que le rapport molaire OH/NCO (noté r2) est inférieur ou égal à 1,00.

Un polyuréthane comprenant des groupements acryliques et des groupements isocyanate préféré est par exemple le CN9303 commercialisé par la société SARTOMER.

Selon d'autres modes de réalisation, le polymère comprenant des groupements acryliques et des groupements isocyanate peut être un polyacrylate et de préférence un polyméthacrylate comprenant des groupements acryliques et des groupements isocyanate.

Les monomères utilisés pour synthétiser le polyacrylate peuvent être des monomères acryliques et méthacryliques tels que l'acide acrylique, l'acide méthacrylique, l'acrylamide, le méthacrylamide, l'acrylonitrile, le méthacrylonitrile, l'acrylate et le méthacrylate. Par exemple, ces monomères peuvent être choisis parmi l'acide acrylique, l'acide méthacrylique, des monomères alkylacryliques, des monomères alkylméthacryliques et des mélanges de ceux-ci, le groupement alkyle ayant de préférence de 1 à 22 atomes carbones, et étant linéaire, ramifié ou cyclique ; et le groupement alkyle ayant de préférence de 1 à 12 atomes de carbones, et étant linéaire, ramifié ou cyclique. Ainsi, ce polymère (comprenant déjà une extrémité acrylate) peut avoir un groupement, tel qu'un groupement hydroxy par exemple, capable de réagir un isocyanate, de préférence un polyisocyanate, pour former le polymère selon l'invention.

Selon encore d'autres modes de réalisation, le polymère peut être un polyester. Dans ce cas, le polyester peut être synthétisé par polycondensation d'un ou plusieurs alcools polyhydriques comprenant de préférence de 2 à 15 atomes de carbone avec des acides polycarboxyliques comprenant de préférence de 2 à 14 atomes de carbone. Ensuite, les polyesters polyols résultants peuvent être estérifiés en présence d'un monomère d'acide carboxylique insaturé tel que l'acide méthacrylique ou acrylique. De plus, un ou plusieurs groupements hydroxyle des polyols peuvent réagir avec un polyisocyanate tel qu'un diisocyanate, pour former le polymère selon l'invention.

Le polymère comprenant au moins un groupement acrylique et au moins un groupement isocyanate peut comprendre de 0,5 à 4 groupements acryliques par mole de polymère, et de préférence de 1 à 2,5 groupements acryliques par mole de polymère. Par exemple, il peut comprendre de 0,5 à 1 ; ou de 1 à 1,5 ; ou de 1,5 à 2 ; ou de 2 à 2,5 ; ou de 2,5 à 3 ; ou de 3 à 3,5 ; ou de 3,5 à 4 groupements acryliques par mole dudit polymère.

Le polymère comprenant au moins un groupement acrylique et au moins un groupement isocyanate peut également comprendre de 0,5 à 3 groupements isocyanate par mole de polymère, et de préférence de 1 à 2,5 groupements isocyanate par mole de polymère. Par exemple, il peut comprendre de 0,5 à 1 ; ou de 1 à 1,5 ; ou de 1,5 à 2 ; ou de 2 à 2,5 ; ou de 2,5 à 3 groupements isocyanate par mole dudit polymère.

Les groupements isocyanate sont distribués de manière statistique en bout de chaîne du polymère. Certaines molécules individuelles pouvant éventuellement être dépourvues de groupement acrylique et/ou de groupement isocyanate.

Les groupements acryliques sont distribués de manière statistique en bout de chaîne et/ou en milieu de chaîne du polymères.

De plus, ce polymère peut avoir une viscosité de 5 000 à 100 000 mPa.s à 23°C. Cette viscosité peut être mesurée avec un viscosimètre Brookfield à 23°C.

Le polymère comprenant au moins un groupement acrylique et au moins un groupement isocyanate peut être présent dans la partie B de la composition à une teneur massique de 1 à 70 %, et de préférence de 1 à 40 %, par rapport au total de la partie B de la composition. Ainsi, cette teneur peut être de 1 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 %.

Selon la présente invention, le polymère comprenant des groupements acryliques et des groupements isocyanate peut agir à la fois comme agent décomplexant pour libérer l'organoborane du complexe organoborane-amine (avec son groupement isocyanate) et aussi de composé polymérisable par voie radicalaire après sa polymérisation initiée par l'organoborane (avec le groupement acrylique). Ainsi, lors de la réticulation de la composition, un seul réseau de polymère homogène est avantageusement créé.

### Composition bi-composante

La composition bi-composante peut également comprendre au moins un monomère ou oligomère acrylique, et de préférence au moins un monomère ou oligomère méthacrylique. La polymérisation de ce composé est effectuée par voie radicalaire c'est-à-dire par une polymérisation en chaîne qui fait intervenir comme espèce active des radicaux. Ainsi, dans le cas où un monomère ou oligomère acrylique est présent dans la composition, ce composé (monomère ou oligomère) peut copolymériser avec le polymère comprenant des groupements acrylique et des groupements isocyanate.

Ce monomère ou oligomère acrylique peut être présent dans au moins une des deux parties (A et B) de la composition.

Selon certains modes de réalisation, le monomère ou oligomère acrylique est présent uniquement dans la partie A de la composition.

Selon d'autres modes de réalisation préférés, le monomère ou oligomère acrylique est présent uniquement dans la partie B de la composition.

Selon encore d'autres modes de réalisation, le monomère ou oligomère acrylique est présent dans la partie A ainsi que dans la partie B de la composition.

Le monomère ou oligomère acrylique peut être choisi parmi un acide acrylique, un ester acrylique, un acrylamide et un acrylonitrile. Il peut également être choisi parmi les monomères ou oligomères alkylacryliques et des mélanges de ceux-ci, le groupement alkyle ayant de préférence de 1 à 22 atomes de carbones et étant linéaire, ramifié ou cyclique ; et le groupement alkyle ayant de préférence de 1 à 12 atomes de carbones et étant linéaire, ramifié ou cyclique. De préférence, le monomère ou oligomère acrylique est un monomère ou oligomère méthacrylique, c'est-à-dire choisi parmi un acide méthacrylique, un ester méthacrylique, un méthacrylamide, un méthacrylonitrile, et les monomères ou oligomères alkylméthacryliques des mélanges de ceux-ci.

Avantageusement, le composé polymérisable par voie radicalaire peut être choisi parmi les acrylates et méthacrylates d'alkyles et de cycloalkyles tels que l'acide acrylique, l'acrylate de méthyle, l'acrylate d'éthyle, l'acrylate de n-propyle, l'acrylate d'isopropyle, l'acrylate d'allyle, l'acrylate de n-butyle, l'acrylate d'isobutyle, l'acrylate de t-butyle, l'acrylate de n-hexyle, l'acrylate de n-octyle, l'acrylate d'isooctyle (SR440 commercialisé par la société SARTOMER), l'acrylate de 2-éthylhexyle, l'acrylate de n-décyle, l'acrylate d'isodecyle (SR395 commercialisé par SARTOMER), l'acrylate de lauryle (SR335 commercialisé par SARTOMER), l'acrylate de tridécyle (SR489 commercialisé par la soiété SARTOMER), l'acrylate d'alkyle en C12-C14 (SR336 commercialisé par SARTOMER), l'acrylate de n-octadecyle (SR484 commercialisé par la société SARTOMER), l'acrylate d'alkyle en C16-C18 (SR257C commercialisé par la société SARTOMER), l'acrylate de cyclohexyle, l'acrylate de t-butyle cyclohexyle (SR217 commercialisé par la société SARTOMER), l'acrylate de 3,3,5-triméthyl cyclohexyle (SR420 commercialisé par la société SARTOMER), l'acrylate d'isobornyle (SR506D commercialisé par la société SARTOMER), l'acide méthacrylique, le méthacrylate de méthyle, le méthacrylate d'éthyle, le méthacrylate de n-propyle, le méthacrylate d'allyle, le méthacrylate d'isopropyle, le méthacrylate de n-butyle, le méthacrylate d'isobutyle, le méthacrylate de t-butyle, le méthacrylate de cyclohexyle, le méthacrylate de n-hexyle, le méthacrylate de n-octyle, le méthacrylate d'isooctyle, le méthacrylate de 2-éthylhexyle, le méthacrylate d'isobornyle, le méthacrylate de n-décyle, le méthacrylate d'isodécyle, le méthacrylate de n-dodécyle, le méthacrylate de tridécyle et des mélanges de ceux-ci. Des composés particulièrement préférés sont l'acrylate de méthyle, l'acrylate d'éthyle, l'acrylate de butyle, l'acrylate de 2-éthylhexyle, le méthacrylate de méthyle, le méthacrylate d'éthyle, le méthacrylate de butyle et le méthacrylate de 2-éthylhexyle.

De plus, le composé polymérisable par voie radicalaire peut être choisi parmi les acrylates et méthacrylates comprenant des hétéroatomes, c'est-à-dire des acrylates et méthacrylates qui comportent au moins un atome qui n'est pas un carbone ou hydrogène dans le groupe de la partie d'alcool de l'ester (sans prendre en compte les atomes du groupe ester lui-même). De préférence, l'atome est un oxygène. Ainsi, le composé polymérisable par voie radicalaire peut être choisi parmi l'acrylate de tétrahydrofurfuryle (SR285 commercialisé par la société SARTOMER), le méthacrylate de tétrahydrofurfuryle (SR203H commercialisé par la société SARTOMER), l'acrylate de glycidyle, l'acrylate de 2-hydroxyéthyle, l'acrylate de 2- et 3-hydroxypropyle, l'acrylate de 2-méthoxyéthyle, l'acrylate de 2-éthoxyéthyle, l'acrylate de 2- et 3-éthoxypropyle, l'acrylate de 2-(2-éthoxyéthoxy)éthyle (SR256 commercialisé par la société SARTOMER), l'acrylate de méthoxy-polyéthylène glycol (comprenant de préférence 2 à 8 motifs (éthoxy) de répétition), l'acrylate de polyéthylène glycol (comprenant de préférence 2 à 8 motifs (éthoxy) de répétition), l'acrylate de polypropylène glycol (comprenant de préférence 2 à 8 motifs (propoxy) de répétition), l'acrylate de polycaprolactone (SR495B commercialisé par la société SARTOMER), l'acrylate de 2-phénoxyéthyle (SR339C commercialisé par la société SARTOMER), l'acrylate de 2-[2-[2-(2-phénoxyéthoxy)éthoxy]éthoxy]éthyle (SR410 commercialisé par la société SARTOMER), l'acrylate de 2-[2-[2-(2-nonylphénoxyéthoxy)éthoxy]éthoxy]éthyle (SR504D commercialisé par la société SARTOMER), l'acrylate de triméthylolpropane formal cyclique (SR531 commercialisé par la société SARTOMER), l'acrylate de glycérol formal cyclique, l'acrylate de 2-[2-[2-(2-dodecyloxyéthoxy)éthoxy]éthoxy]éthyle (SR9075 commercialisé par la société SARTOMER), le méthacrylate de glycidyle, le méthacrylate de 2-hydroxyéthyle, le méthacrylate de 2- et 3-hydroxypropyle, le méthacrylate de 2-méthoxyéthyle, le méthacrylate de 2-éthoxyéthyle, , le méthacrylate de 2- et 3-éthoxypropyle, le méthacrylate de 2-(2-éthoxyéthoxy)éthyle, le méthacrylate de méthoxy-polyéthylène glycol (comprenant de préférence 2 à 8 motifs (éthoxy) de répétition), le méthacrylate de polyéthylène glycol (comprenant de préférence 2 à 8 motifs (éthoxy) de répétition), le méthacrylate de polypropylène glycol (comprenant de préférence 2 à 8 motifs (propoxy) de répétition), le méthacrylate de triméthylolpropane formal cyclique, le méthacrylate de glycérol formal cyclique (VISIOMER^{®} GLYFOMA commercialisé par la société EVONIK) et des mélanges de ceux-ci. Les acrylates et méthacrylates d'éthylène glycol, diéthylène glycol, triméthylpropane, thiéthylène glycol, tétraéthylène glycol, dipropylène glycol, triopropylène glycol, tétrapropylène glycol, pentapropylène peuvent également être utilisés. Des composés particulièrement préférés sont l'acrylate de 2-hydroxyéthyle, l'acrylate de 2-hydroxypropyle, l'acrylate de polycaprolactone, le méthacrylate de 2-hydroxyéthyle, le méthacrylate de 2-hydroxypropyle et le méthacrylate de polycaprolactone. Des composés diacrylates et diméthacrylates peuvent aussi être utilisés dans le cadre de cette invention. De tels composés incluent le diacrylate d'éthylène glycol, le diacrylate de 1,3-butylène glycol, le diacrylate de 1,4-butanediol, le diacrylate de 1,6-hexanediol (SR238 commercialisé par la société SARTOMER), le diacrylate de 3-méthyl-1,5-pentanediol (SR341 commercialisé par la société SARTOMER), le diacrylate de cyclohexanediméthanol, le diacrylate de néopentyle glycol, le diacrylate de 1,10-décanediol (SR595 commercialisé par la société SARTOMER), le diacrylate de tricyclodecanediméthanol (SR833S commercialisé par la société SARTOMER), le diacrylate d'esterdiol (SR606A commercialisé par SARTOMER), les diacrylates aliphatiques alkoxylés tels que le diacrylate de diéthylène glycol, le diacrylate de triéthylène glycol (SR272 commercialisé par la société SARTOMER), le diacrylate de dipropylène glycol (SR508 commercialisé par la Société SARTOMER), le diacrylate de tripropylène glycol (SR306 commercialisé par la société SARTOMER), le diacrylate de tétraéthylène glycol (SR268G commercialisé par la société SARTOMER), les diacrylates de cyclohexanediméthanol éthoxylés et/ou propoxylés, les diacrylates de hexanediol éthoxylés et/ou propoxylés, les diacrylates de néopentyle glycol éthoxylés et/ou propoxylés, le diacrylate de néopentyle glycol hydroxypivalate modifié caprolactone, le diacrylate de dipropylène glycol, le diacrylate de bisphénol A éthoxylé (3) (SR349 commercialisé par la Société SARTOMER), le diacrylate de bisphénol A éthoxylé (10) (SR602 commercialisé par la société SARTOMER), le diacrylate de bisphénol A éthoxylé (30), le diacrylate de bisphénol A éthoxylé (40), le diacrylate de polyéthylène glycol (200) (SR259 commercialisé par la société SARTOMER), le diacrylate de polyéthylène glycol (400) (SR344 commercialisé par la société SARTOMER), le diacrylate de polyéthylène glycol (600) (SR610 commercialisé par la société SARTOMER), les diacrylates de néopentyle glycol propoxylés, le diméthacrylate d'éthylène glycol, le diméthacrylate de 1,3-butylène glycol, le diméthacrylate de 1,4-butanediol, le diméthacrylate de 1,6-hexanediol, le diméthacrylate de 3-méthyl-1,5-pentanediol, le monométhacrylate de 1,6-hexanediol mono acrylate, le diméthacrylate de cyclohexanediméthanol, le diméthacrylate de néopentyle glycol, le diméthacrylate de tricyclodecanediméthanol, les méthacrylates aliphatiques alkoxylés tels que le diméthacrylate de triéthylène glycol, le diméthacrylate de tripropylène glycol, le diméthacrylate de tétraéthylène glycol, les diméthacrylates de cyclohexanediméthanol éthoxylés et/ou propoxylés, les diméthacrylates de hexanediol éthoxylés et/ou propoxylés, les diméthacrylates de néopentyle glycol éthoxylés et/ou propoxylés, le diméthacrylate de néopentyle glycol hydroxypivalate modifié caprolactone, le diméthacrylate de diéthylène glycol, le diméthacrylate de dipropylène glycol, le diméthacrylate de tripropylène glycol, le diméthacrylate de bisphénol A éthoxylé (10), le diméthacrylate de bisphénol A éthoxylé (3), le diméthacrylate de bisphénol A éthoxylé (30), le diméthacrylate de bisphénol A éthoxylé (40), le diméthacrylate de polyéthylène glycol (200), le diméthacrylate de polyéthylène glycol (400), le diméthacrylate de polyéthylène glycol (600), les diméthacrylates de néopentyle glycol éthoxylés et/ou propoxylés et les mélanges de ceux-ci.

Des composés triacrylates et triméthacrylates peuvent aussi être utilisés dans le cadre de cette invention. Tels composés incluent le triméthacrylate de glycérol, le triacrylate de glycérol, les triacrylates de glycérol éthoxylés et/ou propoxylés, le triacrylate de triméthylolpropane (SR351 commercialisé par la société SARTOMER), les triacrylates de triméthylolpropane éthoxylés et/ou propoxylés, le triacrylate de pentaérythritol (SR444D commercialisé par la société SARTOMER), les triacrylates de triméthylolpropane éthoxylés et/ou propoxylés, le triméthacrylate de triméthylolpropane, et le triacrylate de tris(2-hydroxyéthyl)isocyanurate (SR368 commercialisé par la société SARTOMER), le triméthacrylate de tris(2-hydroxyéthyl)isocyanurate, les triméthacrylates de glycérol éthoxylés et/ou propoxylés, les triméthacrylates de triméthylolpropane éthoxylés et/ou propoxylés, et le triméthacrylate de pentaérythritol,

Des composés comprenant plus de trois groupements acrylate ou méthacrylate peuvent également être utilisés tels que par exemple le tétraacrylate de pentaérythritol (SR295 commercialisé par la société SARTOMER), le tétraacrylate de di-triméthylolpropane (SR355 commercialisé par la société SARTOMER), le pentaacrylate de di-pentaérythritol (SR399 commercialisé par la société SARTOMER), les tétraacrylates de pentaérythritol éthoxylés et/ou propoxylés, le tétraméthacrylate de pentaérythritol, le tétraméthacrylate de di-triméthylolpropane, le pentaméthacrylate de di-pentaérythritol et les tetraméthacrylates de pentaérythritol éthoxylés et/ou propoxylés.

De plus, le monomère ou oligomère acrylique peut être choisi parmi des oligomères méthacryliques et acryliques polymérisables tels que les uréthanes méthacrylates et acrylates, les polyesters méthacrylates et acrylates, le polybutadiène méthacrylate et acrylate et les époxy méthacrylates et acrylates. Des composés préférés de cette catégorie sont par exemple les CN1963, CN1964, CN992, CN982, CN9002, CN9012, CN9200, CN964A85, CN965, CN966H90, CN991, CN9245S, CN998B80, CN9210, CN9276, CN9209, PRO21596, CN9014NS, CN9800, CN9400, CN9167, CN9170A86, CN9761, CN9165A commercialisés par la société SARTOMER.

Des monomères ou oligomères acryliques pouvant être utilisés dans le cadre de l'invention peuvent également inclure des monomères acrylamide et méthacrylamide. Par exemple ces monomères peuvent être choisis parmi l'acrylamide, le méthacrylamide, le N-(hydroxyméthyl)acrylamide, le N-(hydroxyéthyl)acrylamide, le N-(isobutoxyméthyl)acrylamide, le N-(3-méthoxypropyl)acrylamide, le N- {tris(hydroxyméthyl)méthyl]acrylamide, le N-isopropylacrylamide, le N-[3-(diméthylamino)propyl]méthacrylamide, l'acrylamide de diacétone, le N,N'-méthylènediméthacrylamide, le N,N'-méthylènediacrylamide, le N,N'-(1,2-dihydroxyéthylène)bisméthacrylamide et le N,N'-(1,2-dihydroxyéthylène)bisacrylamide ainsi que parmi les acrylamides et méthacrylamides formés après réaction de l'acide acrylique ou méthacrylique (ou du chlorure d'acyle de cet acide) avec des amines primaires et/ou secondaires telles que le 1,3-diaminopropane, le N,N'-diméthyl-1,3-diaminopropane, le 1,4-diaminobutane, les polyamidoamines et les polyoxyalkylènepolyamines.

Selon certains modes de réalisation, un seul monomère ou oligomère acrylique est présent dans la partie A et/ou la partie B de la composition.

Selon d'autres modes de réalisation, plusieurs monomères ou oligomères acryliques sont présents dans la partie A et/ou la partie B de la composition.

Le ou les monomères ou oligomères acryliques peuvent être présents dans la partie A et/ou la partie B de la composition à une teneur massique de 0,01 à 70 %, de préférence de 1 à 60 %, et encore de préférence de 25 à 60 % par rapport à la masse totale de la partie A et/ou de la partie B de la composition. Cette teneur peut être par exemple de 0,01 à 1 % ; ou de 1 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 %.

La composition bi-composante, et plus particulièrement la partie B de la composition peut comprendre un agent décomplexant, c'est-à-dire un composé- - autre que le polymère comprenant des groupements acryliques et des groupements isocyanate - capable de réagir avec l'amine comprise dans le complexe organoborane-amine, afin de libérer l'organoborane.

Cette présence d'un agent décomplexant (additionnel par rapport au polymère comprenant des groupements acryliques et des groupements isocyanate) est optionnelle.

Dans le cadre de la présente invention, l'agent décomplexant peut être choisi parmi un isocyanate, un acide de Lewis, un acide carboxylique, un acide minéral, un acide phosphonique, un acide sulfonique un chlorure d'acyle, un anhydride, un aldéhyde, un composé 1,3 dicarbonylé et un époxyde. De préférence, l'agent décomplexant est un isocyanate

Des composés dérivés de diisocyanates tels que les biurets, les uretdiones, les isocyanurates, les allophanates et les diisocyanates oligomères peuvent également être utilisés dans le cadre de la présente invention comme agent décomplexant.

Ainsi, l'isocyanate utilisé dans le cadre de cette invention peut comprendre tout composé comprenant au moins un et de préférence au moins deux groupements isocyanates (polyisocyanate).

A titre d'exemple, la composition bi-composante, et plus particulièrement la partie B de la composition, peut comprendre un ou plusieurs composés isocyanates choisis parmi les alkylène diisocyanates, les cycloalkylène diisocyanates, des diisocyanates aromatiques et aliphatique-aromatiques.

Des exemples spécifiques de tels types d'isocyanate peuvent comprendre l'éthylène-1,2-diisocyanate, le propylène-1,3-diisocyanate, le butylène-1,4-diisocyanate, le pentaméthylène-1,5-diisocyanate (PDI), l'hexaméthylène-1,6-diisocyanate (HDI), le toluène-2,4 diisocyanate (2,4-TDI), le toluène-2,6 diisocyanate (2,6-TDI), le cyclopentylène-1,3-diisocyanate, le cyclohexylène-1,4-diisocyanate, le cyclohexylène-1,2-diisocyanate, l'isophorone diisocyanate (IPDI), le diphénylméthane-4,4'-diisocyanate (4,4'-MDI), le diphénylméthane-2,4'-diisocyanate (2,4'-MDI), le diphénylméthane-2,2'-diisocyanate (2,2'-MDI), le diphénylpropane-4,4'-diisocyanate (DPDI), le m-xylylène diisocyanate (m-XDI), le tétraméthylxylène diisocyanate (TMXDI), le naphtylène-1,4-diisocyanate, le naphtylène-1,5-diisocyanate, le m-phénylène diisocyanate (MPDI), le p-phénylène diisocyanate (PPDI), le diphénylsulphone-4,4'-diisocyanate, le furfurylène diisocyanate, le 4,4',4"-triisocyanatotriphénylméthane, le benzène 1 ,3,5-triisocyanate, l'isocyanature de HDI, l'isocyanature de TDI, l'isocyanature de m-XDI , l'isocyanurate de IPDI (VESTANAT^{®} T1890/100 commercialisé par la société EVONIK), un allophanate de HDI (TOLONATE X FLO 100 commercialisé par la société VENCOREX), le biuret de HDI, l'uretdione de HDI (DESMODUR N 3400 commercialisé par la société COVESTRO), l'adduit glycérol/TDI, l'adduit TDI/triméthylolpropane, l'adduit m-XDI/glycérol, l'adduit m-XDI/triméthylolpropane (TAKENATE^{®} D-110N commercialisé par la société MITSUI CHEMICALS, l'adduit m-H6XDI/triméthylolpropane (TAKENATE^{®} D-120N commercialisé par la société MITSUI CHEMICALS.

De manière préférée, le composé isocyanate utilisé comme agent décomplexant peut-être un prépolymère ayant au moins une extrémité isocyanate obtenu par exemple après la réaction d'un composé isocyanate comme décrit ci-dessus avec un polyol ou une polyamine. Un tel type de prépolymère est le CN9303 commercialisé par la société SARTOMER.

Le prépolymère peut en particulier être un polyuréthane.

Lorsque l'agent décomplexant est un acide de Lewis, celui-ci peut par exemple être choisi parmi le chlorure d'étain ou le chlorure de titane.

Lorsque l'agent décomplexant est un acide carboxylique, celui-ci peut par exemple être choisi parmi l'acide acrylique, l'acide méthacrylique, l'acide formique, l'acide acétique, l'acide éthyl-2-hexanoique, l'acide laurique, l'acide benzoïque, et l'acide p-méthoxybenzoïque ou parmi les acides dicarboxyliques tels que l'acide oxalique, l'acide malonique, l'acide succinique, l'acide glutarique, l'acide maléique, l'acide adipique, l'acide phtalique, l'acide fumarique, l'acide glycolique, l'acide thioglycolique, l'acide lactique, l'acide isophtalique et l'acide téréphtalique.

Lorsque l'agent décomplexant est un acide minéral, celui-ci peut par exemple être choisi parmi l'acide chlorhydrique (HCl), l'acide sulfurique (H₂SO₄), l'acide phosphorique (H₃PO₄), l'acide phosphoreux (H₃PO₃), l'acide hypophosphoreux (H₃PO₂) et l'acide silicique.

Lorsque l'agent décomplexant est un acide phosphonique, celui-ci peut par exemple être choisi parmi l'acide vinylphosphonique, l'acide phénylphosphonique, l'acide méthylphosphonique et l'acide octadecylphosphonique.

Lorsque l'agent décomplexant est un acide sulfonique, celui-ci peut par exemple être choisi parmi l'acide méthanesulfonique et l'acide benzènesulfonique.

Lorsque l'agent décomplexant est un anhydride, celui-ci peut par exemple être choisi parmi l'anhydride acétique, l'anhydride propionique, l'anhydride acrylique, l'anhydride méthacrylique, l'anhydride hexanoïque, l'anhydride décanoïque, l'anhydride laurique, l'anhydride benzoïque, l'anhydride maléique, l'anhydride succinique, l'anhydride méthyl succinique, l'anhydride de 2-octen-1-yl succinique, l'anhydride de 2-dodécen-1-yl succinique, l'anhydride de dodécenylsuccinique, l'anhydride de cyclohexanedicarboxylique, l'anhydride phthalique, l'anhydride trimellitique et l'anhydride pyroméllitique.

Lorsque l'agent décomplexant est un aldéhyde, celui-ci peut par exemple être choisi parmi le benzaldéhyde, le o-, m- et p-nitrobenzaldéhyde, le 2,4-dichlorobenzaldéhyde, le p-tolylaldéhyde et 3-méthoxy-4-hydroxybenzaldéhyde. Des acétals et des dialdéhydes peuvent également être utilisés.

Lorsque l'agent décomplexant est un composé 1,3 dicarbonylé, celui-ci peut par exemple être choisi parmi l'acétoacétate de méthyle, l'acétoacétate d'éthyle, l'acétoacétate de tert-butyle, l'acétoacétate de 2-méthacryloyloxyéthyle, le bis-acétoacétate de diéthylène glycol, le tris-acétoacétate de polycaprolactone, le bis-acétoacétate de polypropylène glycol, le poly(styrène-co-allyle acétoacétate), le N,N-diméthylacétoacétamide, le N-méthylacétoacétamide, le acétoacétanilide, le bis-acétoacétamide d'éthylène, le bis-acétoacétamide polypropylène glycol, l'acétoacétamide et l'acétoacétonitrile.

L'agent décomplexant peut-être présent dans la partie B de la composition à une teneur massique de 0,01 à 70 %, et de préférence de 0,1 à 60 % par rapport à la masse totale de la partie B de la composition. Ainsi, la teneur en agent décomplexant dans la partie B peut notamment être de 0,01 à 0,1 % ; ou de 0,1 à 1 % ; ou de 1 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 %.

La composition bi-composante peut également comprendre au moins une amine additionnelle, l'amine additionnelle étant comme définie ci-dessus.

De préférence, l'amine additionnelle est présente dans la partie A de la composition. La présence de l'amine (en excès par rapport à l'organoborane) permet d'éviter une décomplexation prématurée de l'organoborane, et ainsi de stabiliser le complexe organoborane-amine (et donc la partie A de la composition) de sorte à augmenter sa durée de conservation.

Selon certains modes de réalisation, cette amine additionnelle est la même que l'amine présente dans le complexe organoborane-amine.

Selon d'autres modes de réalisation, cette amine additionnelle est différente que l'amine présente dans le complexe organoborane-amine.

Selon certains modes de réalisation, une seule amine additionnelle est présente dans la composition bi-composante.

Selon d'autres modes de réalisation, deux ou plus que deux amines additionnelles sont présentes dans la composition bi-composante.

Selon des modes de réalisation préférés, il s'agit d'une polyétheramine.

L'amine additionnelle peut être présente dans la composition bi-composante, et de préférence dans la partie A de la composition à une teneur massique de 0,01 à 30 %, et de préférence de 0,01 à 25 % par rapport à la masse totale de la composition et de préférence par rapport à la masse totale de la partie A de la composition. Cette teneur peut être notamment de 0,01 à 0,5 % ; ou de 0,5 à 1 % ; ou de 1 à 5 % ; ou de 5 à 10 % ; ou de 10 à 15 % ; ou de 15 à 20 % ; ou de 20 à 25 % ; ou de 25 à 30 %.

La composition bi-composante peut également comprendre un ou plusieurs additifs choisis parmi les charges, les plastifiants, les résines tackifiantes, les solvants, les stabilisants UV, les absorbeurs d'humidité, les matériaux fluorescents et les additifs rhéologiques.

De tels additifs peuvent être présents dans une des deux parties de la composition, ou alternativement dans les deux parties de la composition.

Par exemple, la partie A de la composition bi-composante peut comprendre des charges, des plastifiants, des résines tackifiantes, des solvants, des stabilisants UV, des absorbeurs d'humidité, des azurants optiques et des additifs rhéologiques.

La partie B de la composition bi-composante peut par exemple comprendre des charges et des plastifiants.

Les charges peuvent être choisies parmi le talc, le mica, le kaolin, la bentonite, les oxydes d'aluminium, les oxydes de titane, les oxydes de fer, le sulfate de baryum, la hornblende, les amphiboles, le chrysotile, le noir de carbone, les fibres de carbone, les silices fumées ou pyrogénées, les tamis moléculaires, le carbonate de calcium, la wollastonite, les billes de verre, les fibres de verre, ainsi que leurs combinaisons.

En ce qui concerne le plastifiant, celui-ci peut être choisi parmi ceux connus de l'homme du métier dans les industries des revêtements ou des adhésifs. Il peut être mentionné, par exemple, des plastifiants à base de phtalate, d'ester de polyol (tel que, par exemple, le tétravalérate de pentaérythritol, commercialisé par PERSTORP), d'huile époxydée, d'esters d'acide alkylsulphonique (tel que, par exemple, le MESAMOLL commercialisé par la société LANXESS), d'esters d'acide 1,2-cyclohexane dicarboxylique (tel que, par exemple, l'HEXAMOLL^{®} DINCH commercialisé par la société BASF) et des mélanges de ceux-ci.

La résine tackifiante peut être notamment choisie parmi : les résines obtenues par polymérisation d'hydrocarbures terpéniques et de phénols, en présence de catalyseurs de Friedel-Crafts telles que la résine DERTOPHENE^{®} 1510 disponible auprès de la société DRT possédant une masse molaire d'environ 870 Da, DERTOPHENE^{®} H150 disponible auprès de la même société de masse molaire égale à environ 630 Da, SYLVAREZ^{®} TP 95 disponible auprès de la société ARIZONA CHEMICAL ayant une masse molaire d'environ 1200 Da ; les résines obtenues par un procédé comprenant la polymérisation d'alpha-méthyl styrène telles que la résine NORSOLENE^{®} W100 disponible auprès de la société CRAY VALLEY, qui est obtenue par polymérisation d'alpha-méthyl styrène sans action de phénols, avec une masse molaire en nombre de 900 Da, SYLVAREZ^{®} 510 qui est également disponible auprès de la société ARIZONA CHEMICAL avec une masse molaire d'environ 1740 Da, dont le procédé d'obtention comprend également l'ajout de phénols ; les colophanes d'origine naturelle ou modifiées, et leurs dérivés hydrogénés, dimérisés, polymérisés ou estérifiés par des monoalcools ou des polyols telles que la résine SYLVALITE^{®} RE 100 qui est un ester de collophane et de pentaeréthritol disponible auprès de la société ARIZONA CHEMICAL et de masse molaire environ 1700 Da ; les résines obtenues par hydrogénation, polymérisation ou copolymérisation de mélanges d'hydrocarbures aliphatiques insaturés ayant environ 5, 9 ou 10 atomes de carbone issus de coupes pétrolières ; les résines terpéniques ; les copolymères à base de terpènes naturels ; et les résines acryliques ayant une viscosité à 100°C inférieure à 100 Pa.s.

Le solvant peut être un solvant volatil à température ambiante (température de l'ordre de 23°C). Le solvant volatl peut par exemple être choisi parmi les alcools volatils à température ambiante, tel que l'éthanol ou l'isopropanol. Le solvant volatil permet par exemple de diminuer la viscosité de la composition bi-composante (de la partie A et/ou de la partie B) et de rendre la composition plus facile à appliquer. Le caractère volatil du solvant permet au produit obtenu après réticulation de la composition, de ne plus contenir de solvant.

Les stabilisants UV peuvent être choisis parmi les benzotriazoles, les benzophénones, les amines dites encombrées telles que le bis(2,2,6,6,-tétraméthyl-4-piperidyl)sébacéate, et leurs mélanges. On peut par exemple citer les produits TINUVIN^{®} 328 ou TINUVIN^{™} 770 commercialisés par la société BASF.

L'azurant optique peut être par exemple du 2,5-thiophènediylbis(5-tert-butyl-1,3-benzoxazole) tel que l'UVITEX^{®} OB commercialisé par la société BASF.

En ce qui concerne les additifs rhéologiques, ceux-ci peuvent être choisis parmi ceux connus de l'homme du métier dans les industries des revêtements ou des adhésifs. Il peut être mentionné, par exemple, la silice (en particulier la silice pyrogénée), une cire d'amide micronisée (telle que, par exemple, la série CRAYVALLAC commercialisée par Arkema).

Les additifs peuvent être présents dans la composition bi-composante à une teneur massique de 0,01 à 80 % par rapport à la masse totale de la composition. Ainsi, les additifs peuvent notamment être présents dans la composition bi-composante à une teneur massique de 0,01 à 0,05 % ; ou de 0,05 à 0,1 % ; ou de 0,1 à 0,5 % ; ou de 0,5 à 1 % ; ou de 1 à 1,5 % ; ou de 1,5 à 2 % ; ou de 2 à 2,5 % ; ou de 2,5 à 3 % ; ou de 3 à 3,5 % ; ou de 3,5 à 4 % ; ou de 4 à 4,5 % ; ou de 4,5 à 5 % ; ou de 5 à 5,5 % ; ou de 5,5 à 6 % ; ou de 6 à 6,5 % ; ou de 6,5 à 7 % ; ou de 7 à 7,5 % ; ou de 7,5 à 8 % ; ou de 8 à 8,5 % ; ou de 8,5 à 9 % ; ou de 9 à 9,5 % ; ou de 9,5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 %.

Les parties A et B de la composition bi-composante peuvent de préférence rester séparées jusqu'à l'utilisation de la composition. Ainsi, la décomplexation de l'organoborane et l'initiation de la polymérisation commencent lorsque la partie A de la composition vient en contact avec la partie B.

Le rapport massique de la partie A de la composition sur la partie B peut être de 0,05 à 10, et de préférence de 0,1 à 1. Ainsi, le rapport massique de la partie A de la composition sur la partie B peut être de 0,05 à 0,1 ; ou de 0,1 à 0,5 ; ou de 0,5 à 0,8 ; ou de 0,8 à 1 ; ou de 1 à 1,2 ; ou de 1,2 à 2 ; ou de 2 à 3 ; ou de 3 à 4 ; ou de 4 à 5 ; ou de 5 à 6 ; ou de 6 à 7 ; ou de 7 à 8 ; ou de 8 à 9 ; ou de 9 à 10.

La composition bi-composante peut avoir un rapport de groupements aminés (compris dans le complexe organoborane-amine) sur des groupements isocyanate (compris dans le polymère comprenant des groupements acryliques et des groupements isocyanate et dans l'agent décomplexant quand celui-ci est présent) supérieur à 1. De préférence ce rapport est de 1 à 2, et encore de préférence de 1,25 à 2. Avantageusement, un rapport de groupements aminés sur des groupements isocyanate supérieur à 1 permet d'obtenir une adhésion maximale étant donné que dans ce cas la totalité de l'organoborane sera activé par réaction de l'isocyanate sur l'amine du complexe organoborane-amine.

### Utilisation de la composition

La composition bi-composante selon l'invention peut être utilisée pour le traitement des substrats ayant une basse énergie de surface. Plus particulièrement, la composition bi-composante selon l'invention peut être utilisée pour le traitement de substrats ayant une énergie de surface inférieure ou égale à 45 mJ/m², de préférence inférieure ou égale à 40 mJ/m², et encore de préférence inférieure ou égale à 35 mJ/m². Par exemple, cette énergie de surface peut être de 10 à 15 mJ/m² ; ou de 15 à 20 mJ/m² ; ou 20 à 25 mJ/m² ; ou de 25 à 30 mJ/m² ; ou 30 à 35 mJ/m² ; ou de 35 à 40 mJ/m² ; ou de 40 à 45 mJ/m². Des substrats présentant une basse énergie de surface sont par exemple les polyoléfines telles que le polyéthylène, le polypropylène, le polybutadiène, le polyisoprène, le poly(fluorure de vinylidène), le polytétrafluoroéthylène ainsi que leurs copolymères. Ces valeurs d'énergie de surface sont bien connues dans l'état de l'art.

Selon certains modes de réalisation, la partie A de la composition peut être mélangée avec la partie B, avant enduction de la composition bi-composante (mélange des parties A et B) à la surface d'un substrat. Ainsi, la décomplexation de l'organoborane et l'initiation de la polymérisation commencent lorsque les deux parties sont mélangées.

La partie A peut-être mélangée avec la partie B à une température de 15 à 40°C, et de préférence de 20 à 25°C.

Ensuite, l'enduction de la composition bi-composante à la surface du substrat peut être effectuée à une température de 15 à 40°C, et de préférence de 20 à 25 °C.

Selon d'autres modes de réalisation, l'une des deux parties A et B de la composition peut être enduite à la surface du substrat dans un premier temps, et dans un deuxième temps la deuxième des deux parties peut être enduite à la surface du substrat au-dessus de la première des deux parties. Ainsi, la décomplexation de l'organoborane et l'initiation de la polymérisation commencent lorsque la deuxième des parties A et B de la composition est enduite sur la surface du substrat.

L'enduction de la première des deux parties de la composition bi-composante à la surface du substrat peut être effectuée à une température de 15 à 40 ° C, et de préférence de 20 à25°C.

Ensuite, l'enduction de la deuxième des deux parties de la composition bi-composante à la surface du substrat peut être effectuée à une température de 15 à 40°C, et de préférence de 20 à25°C.

Selon certains modes de réalisation, dans un premier temps la partie A est enduite à la surface du substrat, et puis dans un deuxième temps la partie B est enduite au-dessus de la partie A sur la surface du substrat.

Selon d'autres modes de réalisation, dans un premier temps la partie A est enduite à la surface du substrat, et puis dans un deuxième temps la partie B est enduite au-dessus de la partie A sur la surface du substrat.

Ainsi, dans les deux modes de réalisation, la composition bi-composante peut former une couche sur la surface du substrat. Cette couche peut avoir une épaisseur de 1 µm à 500 mm, de préférence de 10 µm à 100 mm, et encore de préférence de 10 µm à 10 mm.

Selon certains modes de réalisation, la composition bi-composante selon l'invention peut être utilisée comme une composition adhésive, de sorte à coller deux substrats entre eux. Ainsi, après réticulation, la composition peut former une couche adhésive maintenant deux substrats fixés entre eux. Plus particulièrement, après enduction de la composition bi-composante sur la surface d'un substrat, la surface d'un substrat additionnel peut être mise en contact avec la surface enduite, de sorte à coller les deux substrats. Selon certains modes de réalisation, la mise en contact du substrat additionnel avec la surface enduite, l'ensemble peut être placée sous une presse chauffante de sort à accélérer le collage des deux substrats entre eux. La température de cette presse peut être par exemple de 60 à 110°C, et de préférence de 80 à 100°C.

De préférence au moins un des deux substrats est un substrat ayant une basse énergie de surface. Le deuxième substrat peut être également un substrat ayant une basse énergie de surface. Alternativement, le deuxième substrat peut être un matériau choisi parmi le papier, un métal tel que l'aluminium, un matériau polymérique autre que les substrats de basse énergie de surface, tel que les polyamides, le polystyrène, les polymères vinyliques tels que le polychlorure de vinyle, les polyéthers, les polyuréthanes, les polyesters, l'acrylonitrile butadiène styrène, le poiy(méthacrylate de méthyle), le poly(fluorure de vinylidène), le polytétrafluoroéthylène, le polyfluorure de vinyle et le caoutchouc naturel ou synthétique.

Selon d'autres modes de réalisation, la composition bi-composante selon l'invention peut être utilisée comme revêtement sur la surface d'un substrat. Ainsi, après réticulation, la composition peut former une couche couvrant la surface du substrat afin par exemple de modifier une ou plusieurs propriétés de sa surface. De préférence, ce substrat a une basse énergie de surface, comme décrit ci-dessus.

Selon encore d'autres modes de réalisation, la composition bi-composante selon l'invention peut être utilisée comme primaire. Par « *primaire* » on entend une couche enduite sur un substrat de sorte à améliorer une ou plusieurs propriétés de la surface de ce substrat (par exemple de sorte à améliorer l'adhérence du substrat avec un matériau), afin que des couches supplémentaires puissent être appliquées sur le substrat comprenant la couche de primaire. Par exemple, l'enduction de la composition bi-composante selon l'invention sur un substrat de basse énergie de surface peut permettre d'augmenter son énergie de surface afin de faciliter l'application d'une autre composition adhésive au-dessus de la composition bi-composante.

Ainsi les articles fabriqués après application de la composition selon l'invention comprennent au moins une surface enduite avec la composition bi-composante.

Lorsque la composition bi-composante est utilisée en tant que primaire ou revêtement, il s'agit d'une surface externe de l'article.

Lorsque la composition bi-composante est utilisée en tant qu'adhésif, il s'agit d'une surface interne de l'article, c'est-à-dire une surface de l'article qui est en contact avec par exemple une autre surface de l'article, et la composition bi-composante se trouvant entre ces deux surfaces.

### EXEMPLE

L'exemple suivant illustre l'invention. 6 compositions bi-composantes (A à F) ont été préparées par mélange d'une partie A avec une partie B.

Les parties A et B ont été préparées dans une quantité de 100 g chacune.

Ces deux parties ont été mélangées à un rapport de la partie A sur la partie B de 0,1.

La partie A des compositions A à F comprend 25 % d'un complexe triéthylborane-1,3-diaminopropane et 75 % d'un plastifiant alkylsulfonate (MESAMOLL commercialisé par la société LANXESS). La partie B pour chacune des compositions A à F est détaillée dans le tableau ci-dessous et elle peut comprendre selon la composition :
- un polyuréthane avec des extrémités isocyanate (de 17,7 à 18,3 % de groupements isocyanate),
- un polyuréthane comprenant des groupements acryliques et des groupements isocyanate (avec une teneur en NCO de 10,4 %) (CN9303 commercialisé par la société SARTOMER),
- un polyuréthane comprenant 3 % de groupements méthacryliques et 15 % de groupements isocyanate (appelé ici polyuréthane 1),
- un polyuréthane comprenant 7 % de groupements méthacryliques et 11 % de groupements isocyanate (appelé ici polyuréthane 2),
- un polyuréthane comprenant 13 % de groupements méthacryliques et 5 % de groupements isocyanate (appelé ici polyuréthane 3),
- du tétrahydrofurfuryle méthacrylate (SR203 commercialisé par la société SARTOMER),
- une silice pyrogénée hydrophobe (AEROSIL^{®} R202 commercialisé par la société EVONIK),
- des billes de verres (SiO₂).

La composition F est un exemple comparatif.

| Compositions | A | B | C | D | E | F |
|---|---|---|---|---|---|---|
| Polyuréthane avec extrémités isocyanate (%) | 15 | - | 15 | 15 | 15 | 35 |
| CN9303 | 20 | 35 | - | - | - | - |
| Polyuréthane 1 | - | - | 20 | - | - | - |
| Polyuréthane 2 | - | - | - | 20 | - | - |
| Polyuréthane 3 | - | - | - | - | 20 | - |
| SR203 | 59 | 59 | 59 | 59 | 59 | 59 |
| Aerosil^{®} R202 | 5 | 5 | 5 | 5 | 5 | 5 |
| SiO₂ | 1 | 1 | 1 | 1 | 1 | 1 |

Dans cet exemple, chaque composition (A à F) a été enduite sur une surface (25 mm x 12 mm) d'un substrat en polypropylène ayant des dimensions de 100 mm x 25 mm x 5 mm. Un deuxième substrat du même type est ensuite mis en contact avec le substrat comprenant la composition bi-composante de sorte à coller les deux substrats entre eux. Les deux substrats sont maintenus l'un contre l'autre avec des pinces pendant 14 jours. La résistance au cisaillement des articles fabriqués est ensuite testée en utilisant un dynamomètre à une vitesse de 10 mm/min. Les valeurs obtenues correspondent à une moyenne de 3 mesures. La résistance au cisaillement est reportée avec le mode de défaillance.

Comme illustré dans le tableau ci-dessous, la composition F (comprenant un acrylate ainsi qu'un polyuréthane comprenant des extrémités isocyanate) a été comparée avec les compositions A à E comprenant un polyuréthane comprenant des groupements acryliques et des groupements isocyanate.

| Compositions | Résistance au cisaillement (MPa) | Mode de rupture |
|---|---|---|
| A | 8 | RS |
| B | 5,1 | RS |
| C | 4,5 | RC |
| D | 6,1 | RC |
| E | 6,7 | RC |
| F | 4,2 | RC |

| | | |
|---|---|---|
| RC = rupture cohésive RS = rupture du support | | |

On constate que pour les compositions bi-composantes selon l'invention (A à E), la résistance au cisaillement est supérieure à celle obtenue pour la composition F, ce qui veut dire que les articles fabriqués à partir des compositions A à E présentent des propriétés adhésives améliorées.

## Revendications

1. Composition bi-composante comprenant :
- une partie A comprenant un complexe d'organoborane avec une amine ;
- une partie B comprenant un polymère comprenant au moins un groupement acrylique et au moins un groupement isocyanate ;
la composition comprenant au moins un monomère ou oligomère acrylique dans la partie A et/ou dans la partie B de la composition.

2. Composition selon la revendication 1, dans laquelle l'organoborane est de formule (I) : 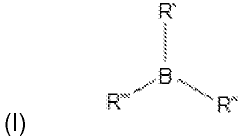
dans laquelle R', R" et R‴ représentent indépendamment un groupement comprenant de 1 à 20 atomes de carbone, le groupement étant linéaire ou ramifié et étant choisi parmi un groupement alkyle, un groupement cycloalkyle, ou un groupement aryle,
et de préférence l'organoborane est du triéthylborane, ou du tri-n-butylborane, ou du tri-sec-butylborane.

3. Composition selon l'une des revendications 1 ou 2, dans laquelle :
- l'amine est de formule (II) : 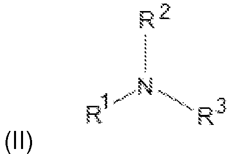 dans laquelle R¹, R² et R³ représentent indépendamment un atome d'hydrogène ou un groupement comprenant de 1 à 20 atomes de carbone, le groupement étant linéaire ou ramifié, saturé ou insaturé et étant choisi parmi un groupement alkyle, un groupement cycloalkyle, ou un groupement aryle ;
- ou l'amine est de formule (III) : 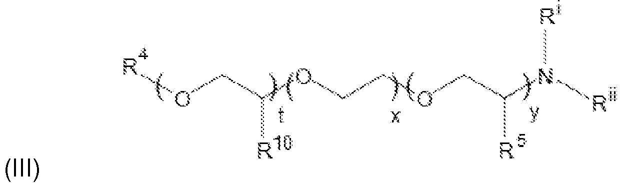 dans laquelle R⁴, R⁵ et R¹⁰ représentent indépendamment un atome d'hydrogène et un groupement comprenant de 1 à 10 atomes de carbone, le groupement étant linéaire ou ramifié, saturé ou insaturé et étant choisi parmi un groupement alkyle, un groupement cycloalkyle, ou un groupement aryle, Rⁱ et Rⁱⁱ représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, ou un groupement aryle, et t, x et y représentent indépendamment un nombre de 0 à 90 préférentiellement de 0 à 70, préférentiellement de 0 à 50 et encore plus préférentiellement de 0 à 30 ;
- ou l'amine est de formule (IV) : 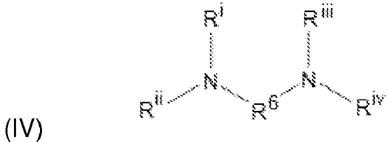 dans laquelle R⁶ représente un groupement divalent comprenant de 2 à 60 atomes de carbone, et de préférence de 2 à 40 atomes de carbone, le groupement étant linéaire ou ramifié, saturé ou insaturé, et étant choisi parmi un radical divalent alkyle, un radical divalent cycloalkyle, un radical divalent arylalkyle, ou un radical divalent aryle, et Rⁱ, Rⁱⁱ, Rⁱⁱⁱ et R^{iv} représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, ou un groupement aryle;
- ou l'amine est de formule (V) : 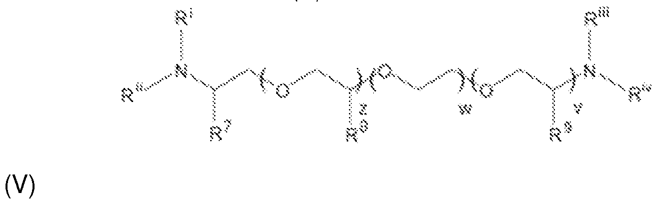 dans laquelle R⁷ R⁸ et R⁹ représentent indépendamment un groupement comprenant de 1 à 10 atomes de carbone, le groupement étant linéaire ou ramifié, saturé ou insaturé, et étant choisi parmi un groupement alkyle, un groupement cycloalkyle, ou un groupement aryle, Rⁱ, Rⁱⁱ, Rⁱⁱⁱ et R^{iv} représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, ou un groupement aryle, et v, w et z représentent indépendamment un nombre de 0 à 90 et encore plus préférentiellement de 0 à 70 ;
- ou l'amine est de formule (VI) : 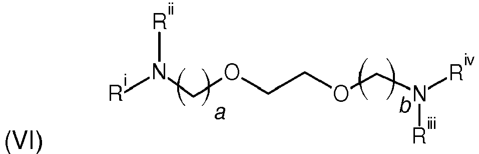 dans laquelle Rⁱ, Rⁱⁱ, Rⁱⁱⁱ et R^{iv} représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, ou un groupement aryle ; a et b représentent indépendamment un nombre de 1 à 20 et de préférence de 2 à 11 ;
- ou l'amine est de formule (VII) : 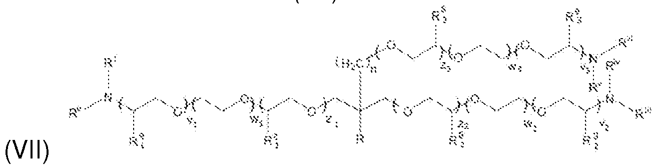 dans laquelle R₁⁸, R₁⁹, R₂⁸, R₂⁹, R₂⁹, R₃⁸, et R₃⁹ représentent indépendamment un groupement comprenant de 1 à 10 atomes de carbone, le groupement étant linéaire ou ramifié et étant choisi parmi un groupement alkyle, un groupement cycloalkyle, ou un groupement aryle, R représente un atome d'hydrogène et un groupement comprenant de 1 à 10 atomes de carbone le groupement étant linéaire ou ramifié et étant choisi parmi un groupement alkyle, un groupement cycloalkyle, ou un groupement aryle, Rⁱ, Rⁱⁱ, Rⁱⁱⁱ et R^{iv} représentent indépendamment un atome d'hydrogène ou un groupement comprenant de 1 à 20 atomes de carbone, le groupement étant linéaire ou ramifié, saturé ou insaturé, et étant choisi parmi un groupement alkyle, un groupement cycloalkyle, ou un groupement aryle, n représente un nombre de 0 à 30 et de préférence égal à 0 ou 1 et les sommes z₁ + z₂ + z₃, v₁+ v₂ + v₃ et w₁ + w₂ + w₃ représentent indépendamment un nombre de 0 à 90, préférentiellement de 0 à 70, préférentiellement de 0 à 50 et encore plus préférentiellement de 0 à 30
et dans laquelle l'amine est de préférence choisie parmi la tert-butylamine, la 3-méthoxypropylamine, la 1,3-propanediamine, la 1,6-hexanediamine, et la diéthylènetriamine.

4. Composition selon l'une des revendications 1 à 3, dans laquelle le complexe organoborane avec l'amine est le triéthylborane-1,3-diaminopropane, le tri-n-butylborane-3-méthoxypropylamine, le triéthylborane-diéthylènetriamine, le tri-n-butylborane-1,3-diaminopropane, le tri-sec-butylborane-1,3-diaminopropane et le triéthylborane-1,6-hexanediamine, et/ou dans laquelle le complexe d'organoborane avec une amine est présent dans la partie A à une teneur massique de 5 à 100 %, de préférence de 5 à 50 %, et encore de préférence de 10 à 30 % par rapport au total de la partie A.

5. Composition selon l'une des revendications 1 à 4, dans laquelle le polymère comprenant au moins un groupement acrylique et au moins un groupement isocyanate est un polyuréthane.

6. Composition selon l'une des revendications 1 à 5, dans laquelle le polymère comprenant au moins un groupement acrylique et au moins un groupement isocyanate a une masse moléculaire moyenne en nombre de 500 à 50 000 g/mol et/ou dans laquelle le polymère comprend de 0,5 à 3 groupements isocyanate par mole de polymère, préférentiellement de 1 à 2,5 groupements isocyanate par mole de polymère et/ou de 0,5 à 4 groupements acryliques par mole de polymère, préférentiellement de 1 à 2,5 groupements acryliques par mole de polymère.

7. Composition selon l'une des revendications 1 à 6, dans laquelle le groupement acrylique est choisi parmi les esters acryliques et les acrylamides, et de préférence le groupement acrylique est un groupement méthacrylique choisi parmi les esters méthacryliques et les méthacrylamides

8. Composition selon l'une des revendications 1 à 7, dans laquelle le polymère comprenant au moins un groupement acrylate et au moins un groupement isocyanate est présent dans la partie B à une teneur massique de 1 à 70 % et de préférence de 1 à 40 % par rapport au total de la partie B.

9. Composition selon l'une des revendications 1 à 8, dans laquelle le rapport massique de la partie A sur la partie B est de 0,05 à 10, et de préférence de 0,1 à 1.

10. Utilisation de la composition selon l'une des revendications 1 à 9, comme adhésif pour lier deux substrats entre eux, ou comme revêtement sur la surface d'un substrat, ou comme primaire sur la surface d'un substrat.

11. Utilisation selon la revendication 10, dans laquelle le substrat ou au moins l'un des deux substrats a une énergie de surface inférieure ou égale à 45 mJ/m², de préférence inférieure ou égale à 40 mJ/m², et encore de préférence inférieure ou égale à 35 mJ/m².

12. Article comprenant au moins une couche obtenue par réticulation de la composition selon l'une des revendications 1 à 9.

13. Article selon la revendication 12, dans lequel la couche est une couche adhésive.

14. Procédé de préparation de l'article selon la revendication 12 ou 13, comprenant :
- le mélange de la partie A avec la partie B de la composition ; et
- l'enduction de ce mélange sur la surface d'un substrat ;
- optionnellement la mise en contact de cette surface avec la surface d'un substrat additionnel.

15. Procédé de préparation de l'article selon la revendication 12 ou 13, comprenant :
- l'enduction d'une des parties A ou B de la composition sur la surface d'un substrat ; et
- l'enduction de la deuxième des parties A ou B de la composition sur la surface du substrat ;
- optionnellement la mise en contact de cette surface avec la surface d'un substrat additionnel.

## Patentansprüche

1. Zweikomponentige Zusammensetzung, umfassend:
- einen Teil A, der einen Komplex eines Organoborans mit einem Amin umfasst;
- einen Teil B, der ein Polymer mit mindestens einer Acrylgruppe und mindestens einer Isocyanatgruppe umfasst;
wobei die Zusammensetzung in Teil A und/oder in Teil B der Zusammensetzung mindestens ein Acrylmonomer oder -oligomer umfasst.

2. Zusammensetzung nach Anspruch 1, wobei das Organoboran die Formel (I) aufweist: 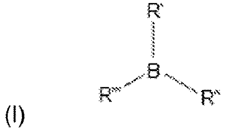
wobei R', R" und R‴ unabhängig für eine Gruppe mit 1 bis 20 Kohlenstoffatomen stehen, wobei die Gruppe linear oder verzweigt ist und aus einer Alkylgruppe, einer Cycloalkylgruppe oder einer Arylgruppe ausgewählt ist,
und das Organoboran vorzugsweise Triethylboran oder Tri-n-butylboran oder Tri-sec-butylboran ist.

3. Zusammensetzung nach Anspruch 1 oder 2, wobei:
- das Amin die Formel (II) aufweist: 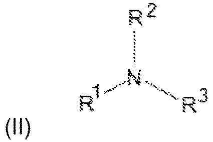 wobei R¹, R² und R³ unabhängig für ein Wasserstoffatom oder eine Gruppe mit 1 bis 20 Kohlenstoffatomen stehen, wobei die Gruppe linear oder verzweigt und gesättigt oder ungesättigt ist und aus einer Alkylgruppe, einer Cycloalkylgruppe oder einer Arylgruppe ausgewählt ist;
- oder das Amin die Formel (III) aufweist: 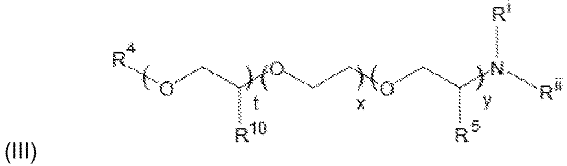 wobei R⁴, R⁵ und R¹⁰ unabhängig für ein Wasserstoffatom oder eine Gruppe mit 1 bis 10 Kohlenstoffatomen stehen, wobei die Gruppe linear oder verzweigt und gesättigt oder ungesättigt ist und aus einer Alkylgruppe, einer Cycloalkylgruppe oder einer Arylgruppe ausgewählt ist, Rⁱ und Rⁱⁱ unabhängig für ein Wasserstoffatom oder eine Gruppe mit 1 bis 20 Kohlenstoffatomen stehen, wobei die Gruppe linear oder verzweigt und gesättigt oder ungesättigt ist und aus einer Alkylgruppe, einer Cycloalkylgruppe oder einer Arylgruppe ausgewählt ist, und t, x und y unabhängig für eine Zahl von 0 bis 90, bevorzugt 0 bis 70, bevorzugt 0 bis 50 noch weiter bevorzugt 0 bis 30 stehen;
- oder das Amin die Formel (IV) aufweist: 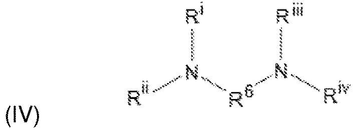 wobei R⁶ für eine zweiwertige Gruppe mit 2 bis 60 Kohlenstoffatomen vorzugsweise 2 bis 40 Kohlenstoffatomen steht, wobei die Gruppe linear oder verzweigt und gesättigt oder ungesättigt ist und aus einem zweiwertigen Alkylrest, einem zweiwertigen Cycloalkylrest, einem zweiwertigen Arylalkylrest oder einem zweiwertigen Arylrest ausgewählt ist, und Rⁱ, Rⁱⁱ, Rⁱⁱⁱ und R^{iv} unabhängig für ein Wasserstoffatom oder eine Gruppe mit 1 bis 20 Kohlenstoffatomen stehen, wobei die Gruppe linear oder verzweigt und gesättigt oder ungesättigt ist und aus einer Alkylgruppe, einer Cycloalkylgruppe oder einer Arylgruppe ausgewählt ist;
- oder das Amin die Formel (V) aufweist: 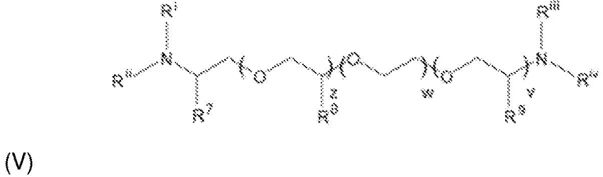 wobei R⁷, R⁸ und R⁹ unabhängig für eine Gruppe mit 1 bis 10 Kohlenstoffatomen stehen, wobei die Gruppe linear oder verzweigt und gesättigt oder ungesättigt ist und aus einer Alkylgruppe, einer Cycloalkylgruppe oder einer Arylgruppe ausgewählt ist, Rⁱ, Rⁱⁱ, Rⁱⁱⁱ und R^{iv} unabhängig für ein Wasserstoffatom oder eine Gruppe mit 1 bis 20 Kohlenstoffatomen stehen, wobei die Gruppe linear oder verzweigt und gesättigt oder ungesättigt ist und aus einer Alkylgruppe, einer Cycloalkylgruppe oder einer Arylgruppe ausgewählt ist, und v, w und z unabhängig für eine Zahl von bis 90 und noch weiter bevorzugt von 0 bis 70 stehen;
- oder das Amin die Formel (VI) aufweist: 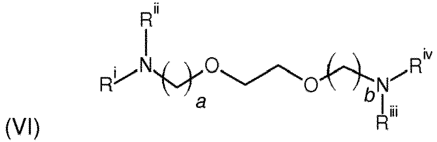 wobei Rⁱ, Rⁱⁱ, Rⁱⁱⁱ und R^{iv} unabhängig für ein Wasserstoffatom oder eine Gruppe mit 1 bis 20 Kohlenstoffatomen stehen, wobei die Gruppe linear oder verzweigt und gesättigt oder ungesättigt ist und aus einer Alkylgruppe, einer Cycloalkylgruppe oder einer Arylgruppe ausgewählt ist; a und b unabhängig für eine Zahl von 1 bis 20 und vorzugsweise von 2 bis 11 stehen;
- oder das Amin die Formel (VII) aufweist: 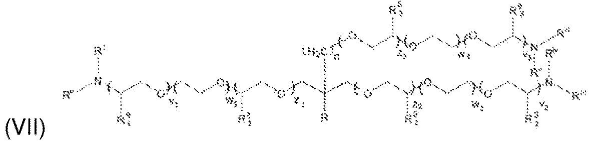 wobei R₁⁸, R₁⁹, R₂⁸, R₂⁹, R₂⁹, R₃⁸ und R₃⁹ unabhängig für eine Gruppe mit 1 bis 10 Kohlenstoffatomen stehen, wobei die Gruppe linear oder verzweigt ist und aus einer Alkylgruppe, einer Cycloalkylgruppe oder einer Arylgruppe ausgewählt ist, R für ein Wasserstoffatom oder eine Gruppe mit 1 bis 10 Kohlenstoffatomen steht, wobei die Gruppe linear oder verzweigt ist und aus einer Alkylgruppe, einer Cycloalkylgruppe oder einer Arylgruppe ausgewählt ist, Rⁱ, Rⁱⁱ, Rⁱⁱⁱ und R^{iv} unabhängig für ein Wasserstoffatom oder eine Gruppe mit 1 bis 20 Kohlenstoffatomen stehen, wobei die Gruppe linear oder verzweigt und gesättigt oder ungesättigt ist und aus einer Alkylgruppe, einer Cycloalkylgruppe oder einer Arylgruppe ausgewählt ist, n für eine ganze Zahl von 0 bis 30 und vorzugsweise gleich 0 oder 1 steht und die Summen z₁ + z₂ + z₃, v₁ + v₂ + v₃ und w₁ + w₂ + w₃ unabhängig für eine Zahl von 0 bis 90, bevorzugt von 0 bis 70, bevorzugt von 0 bis 50 und noch weiter bevorzugt von 0 bis 30 stehen,
und wobei das Amin vorzugsweise aus tert-Butylamin, 3-Methoxypropylamin, 1,3-Propandiamin, 1,6-Hexandiamin und Diethylentriamin ausgewählt ist.

4. Zusammensetzung nach einem der Ansprüche 1 bis 3, wobei es sich bei dem Organoboran-Komplex mit dem Amin um Triethylboran-1,3-Diaminopropan, Tri-n-butylboran-3-Methoxypropylamin, Triethylboran-Diethylentriamin, Tri-n-butylboran-1,3-Diaminopropan, Tri-sec-butylboran-1,3-Diaminopropan und Triethylboran-1,6-hexandiamin handelt und/oder wobei der Komplex eines Organoborans mit einem Amin in Teil A in einem Massengehalt von 5 bis 100 %, vorzugsweise 5 bis 50 % und weiter bevorzugt 10 bis 30 %, bezogen auf die Gesamtheit von Teil A, vorliegt.

5. Zusammensetzung nach einem der Ansprüche 1 bis 4, wobei es sich bei dem Polymer mit mindestens einer Acrylgruppe und mindestens einer Isocyanatgruppe um ein Polyurethan handelt.

6. Zusammensetzung nach einem der Ansprüche 1 bis 5, wobei das Polymer mit mindestens einer Acrylgruppe und mindestens einer Isocyanatgruppe eine zahlenmittlere Molmasse von 500 bis 50.000 g/mol aufweist und/oder wobei das Polymer 0,5 bis 3 Isocyanatgruppen pro Mol Polymer, bevorzugt 1 bis 2,5 Isocyanatgruppen pro Mol Polymer und/oder 0,5 bis 4 Acrylgruppen pro Mol Polymer, bevorzugt 1 bis 2,5 acrylgruppen pro Mol Polymer, aufweist.

7. Zusammensetzung nach einem der Ansprüche 1 bis 6, wobei die Acrylgruppe aus Acrylsäureestern und Acrylamiden ausgewählt ist und die Acrylgruppe vorzugsweise eine aus Methacrylsäureestern und Methacrylamiden ausgewählte Methacrylgruppe ist.

8. Zusammensetzung nach einem der Ansprüche 1 bis 7, wobei das Polymer mit mindestens einer Acrylgruppe und mindestens einer Isocyanatgruppe in Teil B in einem Massengehalt von 1 bis 70 % und vorzugsweise 1 bis 40 %, bezogen auf die Gesamtheit von Teil B, vorliegt.

9. Zusammensetzung nach einem der Ansprüche 1 bis 8, wobei das Massenverhältnis von Teil A zu Teil B 0,05 bis 10 und vorzugsweise 0,1 bis 1 beträgt.

10. Verwendung der Zusammensetzung nach einem der Ansprüche 1 bis 9 als Klebstoff zum Verbinden von zwei Substraten miteinander oder als Beschichtung auf der Oberfläche eines Substrats oder als Grundierung auf der Oberfläche eines Substrats.

11. Verwendung nach Anspruch 10, wobei das Substrat bzw. mindestens eines der beiden Substrate eine Oberflächenenergie kleiner oder gleich 45 mJ/m², vorzugsweise kleiner oder gleich 40 mJ/m² und weiter bevorzugt kleiner oder gleich 35 mJ/m² aufweist.

12. Gegenstand, umfassend mindestens eine durch Vernetzung der Zusammensetzung nach einem der Ansprüche 1 bis 9 erhaltene Schicht.

13. Gegenstand nach Anspruch 12, wobei es sich bei der Schicht um eine Klebstoffschicht handelt.

14. Verfahren zur Herstellung des Gegenstands nach Anspruch 12 oder 13, umfassend:
- Mischen von Teil A mit Teil B der Zusammensetzung
und
- Auftragen dieser Mischung auf die Oberfläche eines Substrats;
- gegebenenfalls Inkontaktbringen dieser Oberfläche mit der Oberfläche eines zusätzlichen Substrats.

15. Verfahren zur Herstellung des Gegenstands nach Anspruch 12 oder 13, umfassend:
- Auftragen eines der Teile A oder B der Zusammensetzung auf die Oberfläche eines Substrats und
- Auftragen des zweiten der Teile A oder B der Zusammensetzung auf die Oberfläche des Substrats;
- gegebenenfalls Inkontaktbringen dieser Oberfläche mit der Oberfläche eines zusätzlichen Substrats.

## Claims

1. A two-component composition comprising:
- a part A comprising a complex of organoborane with an amine;
- a part B comprising a polymer comprising at least one acrylic group and at least one isocyanate group;
the composition comprising at least one acrylic monomer or oligomer in part A and/or in part B of the composition.

2. The composition as claimed in claim 1, wherein the organoborane is of formula (I): 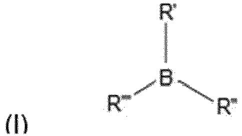
in which R', R" and R‴ independently represent a group comprising from 1 to 20 carbon atoms, the group being linear or branched and being chosen from an alkyl group, a cycloalkyl group, or an aryl group,
and preferably the organoborane is triethylborane or tri-n-butylborane, or tri-sec-butylborane.

3. The composition as claimed in either of claims 1 and 2, wherein:
- the amine is of formula (II): 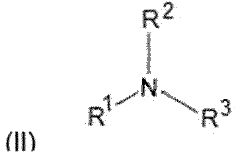 in which R¹, R² and R³ independently represent a hydrogen atom or a group comprising from 1 to 20 carbon atoms, the group being linear or branched and saturated or unsaturated and being chosen from an alkyl group, a cycloalkyl group, or an aryl group;
- or the amine is of formula (III): 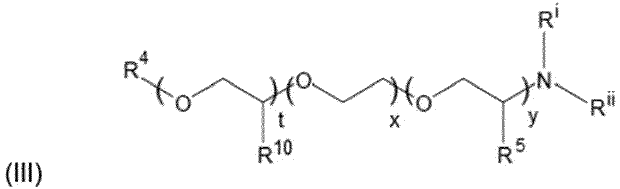 in which R⁴, R⁵ and R¹⁰ independently represent a hydrogen atom or a group comprising from 1 to 10 carbon atoms, the group being linear or branched and saturated or unsaturated and being chosen from an alkyl group, a cycloalkyl group, or an aryl group, Rⁱ and Rⁱⁱ independently represent a hydrogen atom or a group comprising from 1 to 20 carbon atoms, the group being linear or branched and saturated or unsaturated and being chosen from an alkyl group, a cycloalkyl group, or an aryl group, and t, x and y independently represent a number from 0 to 90, preferentially from 0 to 70, preferentially from 0 to 50, and even more preferentially from 0 to 30;
- or the amine is of formula (IV): 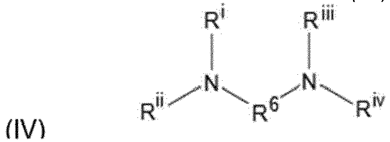 in which R⁶ represents a divalent group comprising from 2 to 60 carbon atoms, and preferably from 2 to 40 carbon atoms, the group being linear or branched and saturated or unsaturated and being chosen from a divalent alkyl radical, a divalent cycloalkyl radical, a divalent arylalkyl radical, or a divalent aryl radical, and Rⁱ, Rⁱⁱ, Rⁱⁱⁱ and R^{iv} independently represent a hydrogen atom or a group comprising from 1 to 20 carbon atoms, the group being linear or branched and saturated or unsaturated and being chosen from an alkyl group, a cycloalkyl group, or an aryl group;
- or the amine is of formula (V): 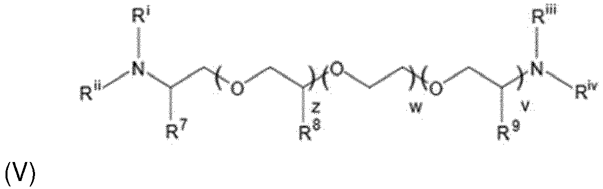 in which R⁷, R⁸ and R⁹ independently represent a group comprising from 1 to 10 carbon atoms, the group being linear or branched and saturated or unsaturated and being chosen from an alkyl group, a cycloalkyl group, or an aryl group, Rⁱ, Rⁱⁱ, Rⁱⁱⁱ and R^{iv} independently represent a hydrogen atom or a group comprising from 1 to 20 carbon atoms, the group being linear or branched and saturated or unsaturated and being chosen from an alkyl group, a cycloalkyl group, or an aryl group, and v, w and z independently represent a number from 0 to 90 and even more preferentially from 0 to 70;
- or the amine is of formula (VI): 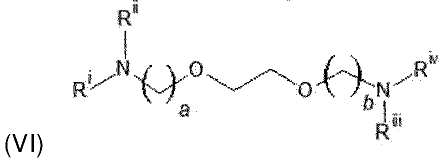 in which Rⁱ, Rⁱⁱ, Rⁱⁱⁱ and R^{iv} independently represent a hydrogen atom or a group comprising from 1 to 20 carbon atoms, the group being linear or branched and saturated or unsaturated and being chosen from an alkyl group, a cycloalkyl group, or an aryl group; a and b independently represent a number from 1 to 20 and preferably from 2 to 11;
- or the amine is of formula (VII): 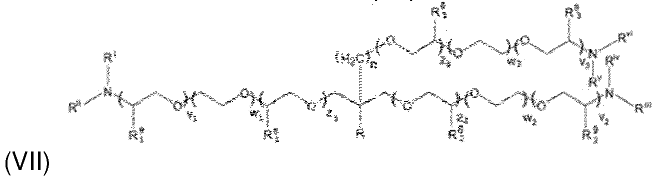 in which R₁⁸, R₁⁹, R₂⁸, R₂⁹, R₂⁹, R₃⁸, and R₃⁹ independently represent a group comprising from 1 to 10 carbon atoms, the group being linear or branched and being chosen from an alkyl group, a cycloalkyl group, or an aryl group, R represents a hydrogen atom or a group comprising from 1 to 10 carbon atoms, the group being linear or branched and being chosen from an alkyl group, a cycloalkyl group, or an aryl group, Rⁱ, Rⁱⁱ, Rⁱⁱⁱ and R^{iv} independently represent a hydrogen atom or a group comprising from 1 to 20 carbon atoms, the group being linear or branched and saturated or unsaturated and being chosen from an alkyl group, a cycloalkyl group, or an aryl group, n represents a number from 0 to 30 and preferably equal to 0 or 1 and the sums z₁ + z₂ + z₃, v₁ + v₂ + v₃ and w₁ + w₂ + w₃ independently represent a number from 0 to 90, preferentially from 0 to 70, preferentially from 0 to 50 and even more preferentially from 0 to 30,
and wherein the amine is preferably chosen from tert-butylamine, 3-methoxypropylamine, 1,3-propanediamine, 1,6-hexanediamine, and diethylenetriamine.

4. The composition as claimed in one of claims 1 to 3, wherein the organoborane complex with the amine is triethylborane-1,3-diaminopropane, tri-n-butylborane-3-methoxypropylamine, triethylborane-diethylenetriamine, tri-n-butylborane-1,3-diaminopropane, tri-sec-butylborane-1,3-diaminopropane and triethylborane-1,6-hexanediamine, and/or wherein the complex of organoborane with an amine is present in part A at a content by mass of 5% to 100%, preferably of 5% to 50%, and more preferably of 10% to 30%, relative to the total of part A.

5. The composition as claimed in one of claims 1 to 4, wherein the polymer comprising at least one acrylic group and at least one isocyanate group is a polyurethane.

6. The composition as claimed in one of claims 1 to 5, wherein the polymer comprising at least one acrylic group and at least one isocyanate group has a number-average molecular mass of 500 to 50 000 g/mol and/or wherein the polymer comprises from 0.5 to 3 isocyanate groups per mole of polymer, preferentially from 1 to 2.5 isocyanate groups per mole of polymer and/or from 0.5 to 4 acrylic groups per mole of polymer, preferentially from 1 to 2.5 acrylic groups per mole of polymer.

7. The composition as claimed in one of claims 1 to 6, wherein the acrylic group is chosen from acrylic esters and acrylamides, and preferably the acrylic group is a methacrylic group chosen from methacrylic esters and methacrylamides.

8. The composition as claimed in one of claims 1 to 7, wherein the polymer comprising at least one acrylate group and at least one isocyanate group is present in part B at a content by mass of 1% to 70% and preferably of 1% to 40%, relative to the total of part B.

9. The composition as claimed in one of claims 1 to 8, wherein the mass ratio of part A to part B is from 0.05 to 10, and preferably from 0.1 to 1.

10. The use of the composition as claimed in one of claims 1 to 9 as an adhesive for binding two substrates together, or as a coating on the surface of a substrate, or as a primer on the surface of a substrate.

11. The use as claimed in claim 10, wherein the substrate or at least one of the two substrates has a surface energy of less than or equal to 45 mJ/m², preferably of less than or equal to 40 mJ/m², and more preferably of less than or equal to 35 mJ/m².

12. An article comprising at least one layer obtained by crosslinking the composition as claimed in one of claims 1 to 9.

13. The article as claimed in claim 12, wherein the layer is an adhesive layer.

14. A method for preparing the article as claimed in claim 12 or 13, comprising:
- mixing part A with part B of the composition; and
- coating this mixture on the surface of a substrate;
- optionally bringing this surface into contact with the surface of an additional substrate.

15. A method for preparing the article as claimed in claim 12 or 13, comprising:
- coating one of parts A or B of the composition on the surface of a substrate; and
- coating the second of parts A or B of the composition on the surface of the substrate;
- optionally bringing this surface into contact with the surface of an additional substrate.
